# EUROPEAN PATENT APPLICATION

(11) **EP 4 312 286 A1**
(43) Date of publication of application: **31.01.2024**
(21) Application number: 22927582.1
(22) Date of filing: 02.06.2022
(51) Int. Cl.: H01M 4/134, H01M 4/38, H01M 4/62, H01M 10/0525

(54) **LITHIUM-COATED COMPOSITION, NEGATIVE ELECTRODE PLATE, SECONDARY BATTERY, BATTERY MODULE, BATTERY PACK, ELECTRIC DEVICE, METHOD AND USE**

(71) Applicant: Contemporary Amperex Technology Co., Limited, Ningde, Fujian 352100 (CN)
(72) Inventor: XUE, Wenwen, Ningde, Fujian 352100 (CN); HE, Xiaoning, Ningde, Fujian 352100 (CN); LIU, Chengyong, Ningde, Fujian 352100 (CN); HU, Bobing, Ningde, Fujian 352100 (CN); HUANG, Xian, Ningde, Fujian 352100 (CN)
(74) Representative: Kraus & Weisert Patentanwälte PartGmbB
(86) International application number: PCT/CN2022/096912
(87) International publication number: WO 2023/231006

(57) **Abstract**

The present application discloses a lithium coating composition, including a lithium-containing metal and a polymer Poly chemically connected to a lithium surface in the lithium-containing metal, and the polymer Poly has a structure shown in Formula I, wherein each occurrence of Rf is independently a fluorine-substituted aliphatic group; each occurrence of X is independently H or an electron-withdrawing group; each occurrence of Z is independently O, S or NR¹¹, wherein R¹¹ is H or C₁₋₃ alkyl; * indicates a site connecting a terminal group; n is an integer ≥10; and at least one cyano group in the polymer Poly forms a chemical connection with lithium in the lithium-containing metal.

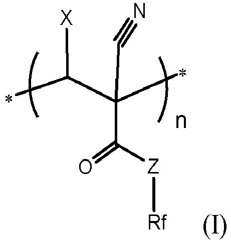

## Description

### TECHNICAL FIELD

The present application relates to the technical field of secondary batteries of lithium metal, and in particular to a lithium coating composition, a negative electrode plate, an electrode assembly, a secondary battery, a battery module, a battery pack, an electrical apparatus, a method and an application.

### BACKGROUND

The statement here only provides background information related to the present application and does not necessarily constitute the prior art.

With the acceleration of the pace of life and the development of various electronic products such as smart phones, tablet personal computers, smart wearables, electric tools and electric vehicles, lithium metal secondary batteries with high energy density are becoming increasingly popular, and high energy density is an irreversible trend in the development of lithium metal secondary batteries in the future.

However, lithium metal secondary batteries in the current market often have the problems of rapid cycle life decay and lithium dendrites.

### SUMMARY OF THE INVENTION

In view of the above problems, the present application provides a lithium coating composition, a negative electrode plate, an electrode assembly, a secondary battery, a battery module, a battery pack, an electrical apparatus, a method and an application. By adopting the lithium coating composition, a dense polymer layer can be formed on the surface of a lithium negative electrode to effectively inhibit the contact reaction between an electrolyte and lithium, reduce the consumption of the electrolyte by lithium, prolong the battery life, and further effectively inhibit the problem of dendrite short circuit.

A first aspect of the present application provides a lithium coating composition, including a lithium-containing metal and a polymer Poly chemically connected to lithium in the lithium-containing metal. The polymer Poly has a structure shown in Formula I: 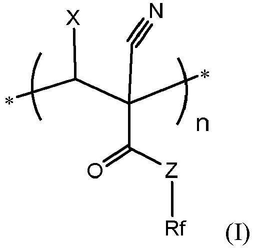 wherein,
each occurrence of Rf is independently a fluorine-substituted aliphatic group;
each occurrence of X is independently H or an electron-withdrawing group;
each occurrence of Z is independently O, S or NR¹¹, wherein R¹¹ is H or C₁₋₃ alkyl;
* indicates a site connecting a terminal group;
n is an integer ≥10; and
at least one cyano group in the polymer Poly forms a chemical connection with lithium in the lithium-containing metal.

In the lithium coating composition, the polymer Poly forms a dense and uniform polymer layer on the surface of lithium-containing metal. When the polymer layer is formed on the surface of the lithium-containing metal of the negative electrode of a lithium metal battery, it can play a role of a protective layer at the negative electrode of the lithium metal battery, effectively inhibit the contact reaction between the electrolyte and lithium, reduce the consumption of the electrolyte and lithium, improve the coulombic efficiency, and prolong the cycle life. The polymer Poly carries a large number of cyano groups, and one or more of the cyano groups can form stable chemical connections (further, form covalent connections) with lithium in the lithium-containing metal, so as to firmly bind the polymer layer to the surface of the lithium-containing metal. Therefore, when the volume of the negative electrode side changes during charging and discharging, the polymer layer can be prevented from peeling off from the surface of the lithium-containing metal. The aliphatic groups containing a large number of fluorine substituents in the polymer Poly serve as side groups. On the one hand, the aliphatic side groups with certain lengths can enhance the elasticity of the polymer layer and prevent the polymer layer from breaking under large volume deformation. On the other hand, the introduction of the fluorine element can effectively regulate the uniform deposition of lithium ions, improve the deposition morphology of lithium dendrites in lithium metal batteries at a certain charging current density, inhibit the formation of lithium dendrites, and alleviate the volume expansion of the lithium negative electrode side. In addition, the dense and uniform polymer layer can also be swelled by the electrolyte, and can provide better ion conductivity (such as 10⁻³ S/cm) after swelling, thereby ensuring efficient transfer of lithium ions in the polymer layer and at the lithium interface, and greatly reducing the interface polarization of a battery cell.

In some examples, each time Rf appears, the fluorine substitution rate in Rf independently satisfies >50%;
further preferably, the fluorine substitution rate in Rf independently satisfies ≥55%;
further preferably, the fluorine substitution rate in Rf independently satisfies ≥65%;
further preferably, the fluorine substitution rate in Rf independently satisfies ≥70%;
further preferably, the fluorine substitution rate in Rf independently satisfies ≥80%;
further preferably, at least 50% of the Rf in the polymer Poly satisfies a fluorine substitution rate ≥80%, or ≥90%;
further preferably, at least 60% of the Rf in the polymer Poly satisfies a fluorine substitution rate ≥70%, ≥80%, or ≥90%;
further preferably, at least 70% of the Rf in the polymer Poly satisfies a fluorine substitution rate ≥60%, >_70%, >_80%, or ≥90%; and
further preferably, at least 80% of the Rf in the polymer Poly satisfies a fluorine substitution rate ≥50%, >_60%, >_70%, >_80%, or ≥90%.

In some examples, each time Rf appears, the number of fluorine atoms in Rf is independently an integer ≥4;
preferably, the number of fluorine atoms in Rf is independently an integer selected from 4 to 20;
further preferably, the number of fluorine atoms in Rf is independently an integer selected from 4 to 16;
further preferably, the number of fluorine atoms in Rf is independently an integer selected from 4 to 15;
further preferably, the number of fluorine atoms in Rf is independently an integer selected from 4 to 13;
further preferably, the number of fluorine atoms in Rf is independently an integer selected from 4 to 10; and
further preferably, the number of fluorine atoms in Rf is 4, 5, 6, 7, 8, 9, 10, 11, 12 or 13 independently.

In some examples, the mass proportion of fluorine element in the polymer Poly is selected from 30% to 55%;
preferably, the mass proportion of fluorine element in the polymer Poly is selected from 35% to 55%; and
further preferably, the mass proportion of fluorine element in the polymer Poly is selected from 30% to 50%.

By means of one or more modes of controlling the fluorine substitution rate in Rf, controlling the number of fluorine atoms in Rf, and controlling the mass proportion of the fluorine element in the polymer Poly, the uniform deposition of lithium ions can be better regulated, the formation of lithium dendrites can be inhibited, the cycle life of lithium ions can be prolonged, the risk of short circuits can be reduced, and the volume expansion of the lithium negative electrode side can be alleviated. Taking the control of the mass proportion of fluorine element in the polymer Poly as an example, it is beneficial to improve the deposition morphology of lithium dendrites in lithium metal batteries and alleviate the volume expansion of lithium negative electrodes at a certain charging current density.

In some examples, each time Rf appears, Rf contains 2 to 10 main chain carbon atoms;
preferably, Rf contains 3 to 10 main chain carbon atoms;
further preferably, Rf contains 3 to 8 main chain carbon atoms; and
further preferably, Rf contains 3, 4, 5, 6, 7 or 8 main chain carbon atoms.

In some examples, each time Rf appears, the number of carbon atoms in Rf is an integer selected from 2 to 10;
preferably, the number of carbon atoms in Rf is an integer selected from 3 to 10;
further preferably, the number of carbon atoms in Rf is an integer selected from 3 to 8; and
further preferably, the number of carbon atoms in Rf is 3, 4, 5, 6, 7 or 8.

By controlling main chain carbon atoms in Rf, the length of the side group of Rf may further be adjusted by controlling the number of carbon atoms in Rf, so as to endow the polymer layer with appropriate elasticity, and better prevent the polymer layer from breaking under large volume deformation.

In some examples, each time Rf appears, Rf further contains one or more heteroatoms selected from the group consisting of iodine, nitrogen, oxygen, sulfur, silicon, boron and phosphorus.

In some examples, each time Rf appears, the number of any one of the heteroatoms in Rf is 1 or more;
preferably, the number of any one of the heteroatoms in Rf is selected from 1 to 5; and
further preferably, the number of any one of the heteroatoms in Rf is selected from 1, 2, 3 or 4.

In some examples, each time Rf appears, the number of the heteroatoms in Rf satisfies one or more of the following:
the number of oxygen atoms in Rf is 1, 2, 3, 4 or 5;
the number of nitrogen atoms in Rf is 1, 2 or 3;
the number of sulfur atoms in Rf is 1, 2 or 3;
the number of phosphorus atoms in Rf is 1 or 2;
the number of iodine atoms in Rf is 1, 2, 3, 4, 5 or 6;
the number of silicon atoms in Rf is 1 or 2; and
the number of boron atoms in Rf is 1 or 2.

In some examples, each time Rf appears, Rf contains one or more atoms or atomic groups selected from the group consisting of iodine groups, -NR¹²-, -O-, -S-, - S(O)₂-, >Si<, >B- and >P(=O)-, wherein R¹² is H or C₁₋₃ alkyl;
preferably, R¹² is H or methyl; and
further preferably, R¹² is H.

In some examples, each time Rf appears, Rf contains one or more atoms or atomic groups selected from the group consisting of -O-, -S(O)₂- and -(O=)P(O-)₂;
preferably, Rf contains one or more -O-;
further preferably, Rf contains -S(O)₂F; and
further preferably, Rf contains -(O=)P(O-)₂.

By introducing heteroatoms other than fluorine atoms into Rf, such as one or more heteroatoms of iodine, nitrogen, oxygen, sulfur, silicon, boron and phosphorus, special properties can be endowed to the polymer layer. For example, phosphorus element has a certain flame retardant effect. For another example, iodine element can also play a certain role in regulating the deposition of lithium ions. For another example, the sulfonyl fluoride group has a certain positive effect on improving the ion conductivity of the polymer layer.

In some examples, each occurrence of the fluorine-substituted aliphatic group is independently a straight chain structure or a branched chain structure.

Straight chain Rf is beneficial to improve the flexibility of polymer materials. Branched chain Rf is beneficial to improve the swelling ability of an electrolyte membrane, thereby improving the ion conductivity.

In some examples, each time Rf appears, the structure of Rf is independently shown in Formula III-1, Formula III-2 or Formula III-3: 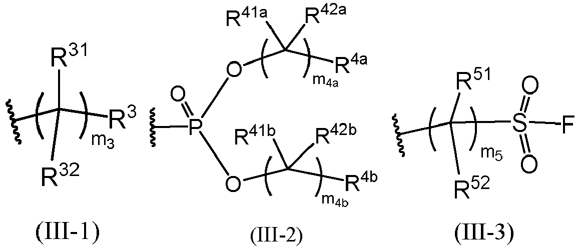 wherein each occurrence of R³¹, R³² and R³ is independently H or F; each occurrence of m₃ is independently an integer selected from 2 to 10; Formula III-1 contains at least 4 F atoms;
preferably, m₃ is an integer selected from 3 to 10;
further preferably, m₃ is an integer selected from 3 to 8;
further preferably, m₃ is 3, 4, 5, 6, 7 or 8;
each occurrence of R^{41a}, R^{42a}, R^{4a}, R^{41b}, R^{42b} and R^{4b} is independently H or F; each occurrence of m₄ₐ and m4_{4b} is independently an integer selected from 1 to 9 (1, 2, 3, 4, 5, 6, 7, 8 or 9); Formula III-2 contains at least 4 F atom;
preferably, m₄ₐ and m4_{4b} are each independently an integer selected from 2 to 9;
further preferably, m₄ₐ and m4_{4b} are each independently an integer selected from 2 to 8;
further preferably, m₄ₐ and m4_{4b} are each independently an integer selected from 3 to 8;
further preferably, m₄ₐ and m4_{4b} are each independently an integer selected from 3 to 6;
each occurrence of R⁵¹ and R⁵² is independently H or F; each occurrence of m₅ is independently an integer selected from 2 to 10; Formula III-3 contains at least 4 F atoms;
preferably, m₅ is an integer selected from 3 to 10;
further preferably, m₅ is an integer selected from 3 to 8; and
further preferably, m₅ is 3, 4, 5, 6, 7 or 8.

In some examples, each time Rf appears, the structure of Rf is shown in Formula III-1;
or, each time Rf appears, the structure of Rf is shown in Formula III-2;
or, each time Rf appears, the structure of Rf is shown in Formula III-3.

The structure shown in Formula III-1 is a linear saturated fluorinated aliphatic chain. On the one hand, better elasticity can be endowed to the polymer layer to prevent the polymer layer from breaking under large volume deformation. On the other hand, fluorine element can effectively regulate the uniform deposition of lithium ions, inhibit the formation of lithium dendrites, and alleviate the volume expansion of the lithium negative electrode side.

The structure shown in Formula III-2 may introduce phosphorus element, and at this time, a phosphate ester group is formed between Z-Rf.

The structure shown in Formula III-3 may introduce a sulfonyl fluoride group, which has a certain positive effect on improving the ion conductivity of the polymer layer.

In some examples, each time Formula III-1 appears, the number of H atoms therein is 0, 1, 2, 3 or 4; each time Formula III-2 appears, the number of H atoms therein is 0, 1, 2, 3, 4, 5 or 6; and each time Formula III-3 appears, the number of H atoms therein is 0, 1, 2, 3 or 4.

Preferably, each time Formula III-1 appears, the number of H atoms therein is 0; each time Formula III-2 appears, the number of H atoms therein is 0; and each time Formula III-3 appears, the number of H atoms therein is 0.

By controlling the number of H atoms, it is possible to regulate the number of sites available for fluorine substitution.

In some examples, each occurrence of Rf is independently selected from any one of the following structures:

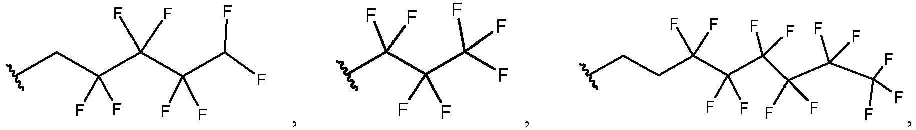

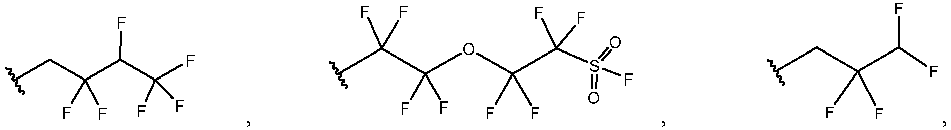

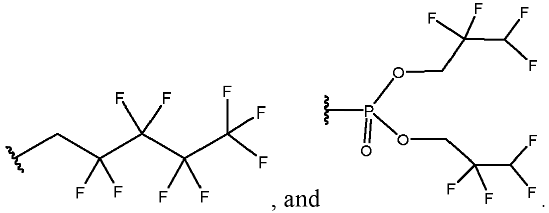

In some examples, each occurrence of X is independently H or an electron-withdrawing group containing 1 to 6 non-hydrogen atoms.

In some examples, each occurrence of X is independently H or cyano, nitro or - NR²¹R²², wherein R²¹ and R²² are each independently H or C₁₋₃ alkyl;
preferably, R²¹ and R²² are each independently H or methyl; and
further preferably, R²¹ and R²² are both methyl.

An electron-withdrawing group is introduced at a site X, which is beneficial for promoting the increase in reactivity of carbon-carbon double bonds in cyanoacrylic derivative monomers during the formation of a polymer layer, thereby promoting the in-situ polymerization reaction.

In some examples, each occurrence of Z is independently O, S or NH;
preferably, each occurrence of Z is independently O or NH;
further preferably, each occurrence of Z is O; and
further preferably, each occurrence of Z is NH.

The linking group Z can form reactive functional group pairs with different reactive functional groups through -COOH in cyanoacrylic derivative monomers or derived reactive forms thereof (such as the form of acyl chloride, and the activated form of the N-succinimide ester group of carboxyl), so as to generate different types of chemical bonds through coupling reactions. For example, when Z is O, S or NH, it can be obtained through the coupling reaction of -COOH in cyanoacrylic derivative monomers or derived reactive forms thereof with -OH, -SH, and -NH₂. The diversification of Z is the result of the flexible matching reaction of reactive monomers.

In some embodiments, Rf in Formula I is the same; each occurrence of X in Formula I is the same; and each occurrence of Z in Formula I is the same. At this time, a single type of monomer can be used for a polymerization reaction.

In some examples, n is an integer selected from 10 to 1000, further preferably an integer selected from 10 to 950, further preferably an integer selected from 10 to 800, further preferably an integer selected from 15 to 800, further preferably an integer selected from 20 to 800, further preferably an integer selected from 40 to 800, further preferably an integer selected from 50 to 800, further preferably an integer selected from 100 to 800, further preferably an integer selected from 10 to 750, further preferably an integer selected from 15 to 750, further preferably an integer selected from 20 to 750, further preferably an integer selected from 40 to 750, further preferably an integer selected from 50 to 750, further preferably an integer selected from 80 to 750, further preferably an integer selected from 100 to 750, further preferably an integer selected from 10 to 650, further preferably an integer selected from 15 to 650, further preferably an integer selected from 20 to 650, further preferably an integer selected from 40 to 650, further preferably an integer selected from 50 to 650, further preferably an integer selected from 100 to 650, further preferably an integer selected from 150 to 500, and further preferably an integer selected from 200 to 350.

In some examples, the number average molecular weight of the polymer Poly is selected from 10 kDa to 200 kDa;
Preferably, the number average molecular weight of the polymer Poly is selected from 50 kDa to 100 kDa.

n in Formula I is numerically equal to the degree of polymerization of the polymer Poly. The regulation of the molecular weight of the polymer Poly can be realized by controlling n. By adjusting the degree of polymerization or molecular weight, the molecular chain length of the polymer Poly can be adjusted, which not only achieves effective coating of the lithium-containing metal, but also maintains stable chemical connections, and can also affect the density and uniformity of the polymer layer.

In some examples, the content of lithium in the lithium-containing metal relative to the polymer Poly is greater than the catalyst dosage, measured in a molar ratio;
preferably, the lithium-containing metal includes a lithium metal or a lithium alloy; and
further preferably, the lithium alloy contains lithium, and also contains one or more of silver, magnesium, aluminum, gold, zinc, tin, copper, nickel and titanium.

In the coating composition, as long as the lithium-containing metal can provide a catalyst dosage, it can smoothly catalyze the in-situ polymerization reaction of cyanoacrylic derivative monomers on the surface of the lithium-containing metal.

A second aspect of the present application provides a negative electrode plate, wherein the negative electrode plate includes a negative electrode plate substrate and a polymer layer which are stacked. The negative electrode plate substrate includes a lithium-containing layer in contact with the polymer layer, the lithium-containing layer contains lithium, and the polymer layer is chemically connected to at least a portion of lithium in the lithium-containing layer;
wherein the polymer layer includes the polymer Poly defined in the first aspect of the present application.

A dense and uniform polymer layer is formed on the surface of the lithium-containing layer on at least one side of the negative electrode plate, which can play a role of a protective layer at the negative electrode of a lithium metal battery, effectively inhibit the contact reaction between the electrolyte and lithium, reduce the consumption of the electrolyte and lithium, improve the coulombic efficiency, and prolong the cycle life.

In some examples, the content of lithium in the lithium-containing layer relative to the polymer Poly is greater than the catalyst dosage, measured in a molar ratio;
preferably, the lithium-containing layer includes a lithium metal or a lithium alloy;
further preferably, the lithium-containing layer is essentially composed of lithium metals;
further preferably, the lithium-containing layer is a lithium alloy; and
further preferably, the lithium alloy contains lithium, and also contains one or more of silver, magnesium, aluminum, gold, zinc, tin, copper, nickel and titanium. In some examples, the polymer layer further contains an electrolyte. At this time, it is beneficial to provide better ion conductivity.

In some examples, the electrolyte contains a lithium salt and an electrolyte solvent.

In some examples, the lithium salt is selected from one or more of lithium hexafluorophosphate, lithium tetrafluoroborate, lithium bis(fluorosulfonyl)imide, lithium bis(trifluoromethanesulfonyl)imide, lithium difluoro(oxalato)borate, lithium perchlorate, and lithium bis(oxalate)borate; and
preferably, the electrolyte solvent is selected from one or more of ethylene carbonate, propylene carbonate, dimethyl carbonate, diethyl carbonate, ethyl methyl carbonate, dipropyl carbonate, diphenyl carbonate, dibutyl carbonate, butene carbonate, dimethoxyethane, tetrahydrofuran, dioxolane, methyl 9-fluoro-n-butyl ether, 1,1,2,2-tetrafluoroethyl-2,2,3,3-tetrafluoropropyl ether, octafluoropentyl-tetrafluoroethyl ether, 1,2-di(cyanoethoxy)ethane, diphenyl ether, and 18-crown ether-6.

In some examples, the concentration of the lithium salt in the electrolyte is selected from 0.5 mol/L to 10 mol/L;
preferably, the concentration of the lithium salt in the electrolyte is selected from 0.5 mol/L to 8 mol/L;
further preferably, the concentration of the lithium salt in the electrolyte is selected from 0.5 mol/L to 5 mol/L;
further preferably, the concentration of the lithium salt in the electrolyte is selected from 5 mol/L to 10 mol/L;
further preferably, the concentration of the lithium salt in the electrolyte is selected from 0.5 mol/L to 3 mol/L; and
further preferably, the concentration of the lithium salt in the electrolyte is selected from 0.5 mol/L to 2 mol/L.

The concentration of the lithium salt in the electrolyte will also affect the deposition morphology of lithium ions. The concentration of the lithium salt will change the solvation of Li⁺ in the electrolyte, which affects the composition of a solid electrolyte interface film (SEI film) and the deposition morphology of lithium ions. By controlling the lithium salt in the electrolyte at an appropriate concentration, dense and uniform deposition of lithium ions and smaller volume expansion can be achieved. In addition, by controlling the lithium salt in the electrolyte at an appropriate concentration, the polymer layer can also have appropriate mechanical properties, which can avoid excessive lithium salt concentration that is not conducive to mechanical properties, and can also achieve better lithium ion conductivity during charging and discharging to avoid poor lithium ion conductivity caused by insufficient lithium salt concentration.

In some examples, the mass ratio of the polymer Poly to the electrolyte is selected from 199:1 to 1:1;
preferably, the mass ratio of the polymer Poly to the electrolyte is selected from 19:1 to 1:1;
further preferably, the mass ratio of the polymer Poly to the electrolyte is selected from 9.5:1 to 1:1;
further preferably, the mass ratio of the polymer Poly to the electrolyte is selected from 8:1 to 2:1; and
further preferably, the mass ratio of the polymer Poly to the electrolyte is selected from 6:1 to 1:1.

In some examples, the mass proportion of the electrolyte in the polymer layer is selected from 0.5% to 50%;
preferably, the mass proportion of the electrolyte in the polymer layer is selected from 1% to 50%;
further preferably, the mass proportion of the electrolyte in the polymer layer is selected from 2% to 50%;
further preferably, the mass proportion of the electrolyte in the polymer layer is selected from 5% to 50%;
further preferably, the mass proportion of the electrolyte in the polymer layer is selected from 8% to 50%;
further preferably, the mass proportion of the electrolyte in the polymer layer is selected from 9% to 50%;
further preferably, the mass proportion of the electrolyte in the polymer layer is selected from 9.5% to 50%;
further preferably, the mass proportion of the electrolyte in the polymer layer is selected from 10% to 50%; and
further preferably, the mass proportion of the electrolyte in the polymer layer is selected from 30% to 50%.

The mass proportion of the electrolyte in the polymer layer can be adjusted by controlling the mass ratio of the polymer Poly to the electrolyte in an appropriate range. The mass fraction of the electrolyte in the polymer layer will affect the elasticity and ion conductivity of a protective layer. The presence of a certain content of lithium salt and solvent can plasticize the polymer layer to improve the elasticity of the polymer layer. In addition, during the in-situ polymerization process of the polymer layer, lithium salts and solvents are incorporated into the polymer layer. On the microscopic scale, the polymer layer has a sponge-like loose porous structure, and pores are filled with the electrolyte, thereby providing a pathway for the subsequent transmission of lithium ions.

In some examples, the thickness of the polymer layer is selected from 5 nm to 10 µm;
preferably, the thickness of the polymer layer is selected from 50 nm to 8 µm;
further preferably, the thickness of the polymer layer is selected from 50 nm to 5 µm; and
further preferably, the thickness of the polymer layer is selected from 100 nm to 5 µm.

The structure of the polymer layer on the surface of the lithium-containing metal can be controlled at the nanometer scale, which is beneficial for an assembled battery cell to exhibit smaller interface impedance.

In some examples, the polymer layer has an elastic modulus of 0.1 MPa to 80 MPa at 25°C;
preferably, the polymer layer has an elastic modulus of 0.5 MPa to 50 MPa at 25°C;
further preferably, the polymer layer has an elastic modulus of 1 MPa to 50 MPa at 25°C; and
further preferably, the polymer layer has an elastic modulus of 10 MPa to 50 MPa at 25°C.

In some examples, the polymer layer has an elastic deformation range of 20% to 500% at 25°C;
preferably, the polymer layer has an elastic deformation range of 20% to 300% at 25°C;
further preferably, the polymer layer has an elastic deformation range of 20% to 200% at 25°C;
further preferably, the polymer layer has an elastic deformation range of 100% to 300% at 25°C;
further preferably, the polymer layer has an elastic deformation range of 100% to 200% at 25°C; and
further preferably, the polymer layer has an elastic deformation range of 100% to 190% at 25°C.

In some examples, based on the electrolyte, the swelling rate of the polymer layer at 25°C is selected from 5% to 50%;
preferably, the swelling rate of the polymer layer at 25°C is selected from 10% to 50%;
further preferably, the swelling rate of the polymer layer at 25°C is selected from 10% to 45%; and
further preferably, the swelling rate of the polymer layer at 25°C is selected from 20% to 45%.

In some examples, based on the electrolyte, the ion conductivity of the swollen polymer layer is selected from 5 × 10⁻³ S/cm to 1×10⁻⁶ S/cm;
preferably, the ion conductivity of the swollen polymer layer at 25°C is selected from 5×10⁻³ S/cm to 1×10⁻⁵ S/cm;
further preferably, the ion conductivity of the swollen polymer layer at 25°C is selected from 5×10⁻³ S/cm to 1×10⁻⁴ S/cm;
further preferably, the ion conductivity of the swollen polymer layer at 25°C is selected from 3×10⁻³ S/cm to 1×10⁻⁴ S/cm; and
further preferably, the ion conductivity of the swollen polymer layer at 25°C is selected from 3×10⁻³ S/cm to 5×10⁻⁴ S/cm.

In some examples, the negative electrode plate substrate further includes a negative electrode current collector. The negative electrode current collector is located on the side of the lithium-containing layer away from the polymer layer.

In some examples, a second negative electrode active material layer is disposed or not disposed between the negative electrode current collector and the lithium-containing layer, and the components in the second negative electrode active material layer and the lithium-containing layer may be the same or different.

A third aspect of the present application provides an electrode assembly, including a positive electrode plate, a separator and the negative electrode plate according to the second aspect of the present application, which are stacked, wherein the separator is disposed between the negative electrode plate and the positive electrode plate; and the polymer layer is at least disposed on the surface of the negative electrode plate substrate on the side close to the separator.

A dense and uniform polymer layer is formed on the surface of the lithium-containing layer on the surface of at least one side of the negative electrode plate in the electrode assembly, which can play a role of a protective layer at the negative electrode of a lithium metal battery, effectively inhibit the contact reaction between the electrolyte and lithium, reduce the consumption of the electrolyte and lithium, improve the coulombic efficiency, and prolong the cycle life.

A fourth aspect of the present application provides a secondary battery, including a battery cell electrolyte and the electrode assembly according to the third aspect of the present application. The battery cell electrolyte is disposed between the polymer layer and the positive electrode plate.

A dense and uniform polymer layer is formed on the surface of the lithium-containing layer on the surface of at least one side of the negative electrode plate in the secondary battery, which can play a role of a protective layer at the negative electrode of a lithium metal battery, effectively inhibit the contact reaction between the electrolyte and lithium, reduce the consumption of the electrolyte and lithium, improve the coulombic efficiency, and prolong the cycle life.

In some examples, the components of the battery cell electrolyte and the electrolyte in the polymer layer may be the same or different.

In some examples, the charging current density of the secondary battery is selected from 0.3 mA/cm² to 12 mA/cm²;
preferably, the charging current density of the secondary battery is selected from 1 mA/cm² to 10 mA/cm²; and
further preferably, the charging current density of the secondary battery is selected from 1 mA/cm² to 6 mA/cm².

A fifth aspect of the present application provides a battery module, including the secondary battery according to the fourth aspect of the present application.

A sixth aspect of the present application provides a battery pack, including the battery module according to the fifth aspect of the present application.

A seventh aspect of the present application provides an electrical apparatus, including one or more of the secondary battery according to the fourth aspect of the present application, the battery module according to the fifth aspect of the present application, and the battery pack according to the sixth aspect of the present application.

An eighth aspect of the present application provides an application of a monomer compound II in preparation of a negative electrode plate, wherein the structure of the monomer compound II is shown in Formula II: 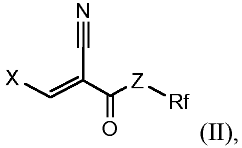 wherein Rf, Z and X are each independently defined in the first aspect of the present application.

In some examples, the monomer compound II contacts lithium in the lithium-containing layer of the negative electrode plate substrate so as to form a polymer layer through in-situ polymerization.

The monomer compound II is a cyanoacrylic derivative compound, wherein cyano can be in contact with lithium in the outermost layer of the negative electrode plate substrate to form a chemical connection, and carbon-carbon double bonds can undergo the in-situ polymerization reaction under lithium catalysis, so as to prepare the lithium coating composition according to the first aspect of the present application. At this time, a firmly connected, dense and uniform polymer layer is formed on the surface of the lithium-containing layer of the negative electrode, which can play a role of the above-mentioned protective layer.

A ninth aspect of the present application provides a preparation method of a negative electrode plate, including the following steps:
providing a negative electrode plate substrate, the outermost layer on at least one side of the negative electrode plate substrate being a lithium-containing layer, and the lithium-containing layer including a lithium-containing metal; further providing a reaction mixture containing a monomer compound II and an electrolyte; and
coating the reaction mixture on the surface of the lithium-containing layer on at least one side of the negative electrode plate substrate, and polymerizing the monomer compound II in situ to form a polymer layer. 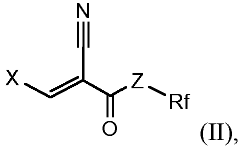
wherein Rf, Z and X are each independently defined in the first aspect of the present application; and
the electrolyte is defined in the second aspect of the present application.

In the presence of an electrolyte, cyano in the monomer compound II can be in contact with lithium in the outermost layer of the negative electrode plate substrate to form a chemical connection (covalent connection), and carbon-carbon double bonds can undergo the in-situ polymerization reaction under lithium catalysis, so as to form the polymer Poly shown in Formula I to prepare the lithium coating composition according to the first aspect of the present application. At this time, a firmly connected, dense and uniform polymer layer is formed on the surface of the lithium-containing layer, which can play a role of the above-mentioned protective layer. Compared with the physical coating action in the traditional technology, the polymer layer not only stably binds to the surface of the lithium-containing layer through chemical connections to avoid falling off from the surface of the lithium-containing layer during charging and discharging, but also has a dense and uniform coating, and the thickness of the coating can be controlled at the nanometer scale. The assembled battery cell can exhibit smaller interface impedance.

In some examples, the monomer compound II provided in the present application contacts with at least a catalyst dosage of lithium. On the one hand, chemical connection sites for the polymer layer are provided. On the other hand, the in-situ polymerization reaction of cyanoacrylic derivative monomers is effectively catalyzed.

In some examples, the mass ratio of the polymer Poly to the electrolyte is selected from 199:1 to 1:1;
preferably, the mass ratio of the polymer Poly to the electrolyte is selected from 19:1 to 1:1;
further preferably, the mass ratio of the monomer compound II to the electrolyte is selected from 9.5:1 to 1:1;
further preferably, the mass ratio of the monomer compound II to the electrolyte is selected from 8:1 to 2:1; and
further preferably, the mass ratio of the monomer compound II to the electrolyte is selected from 6:1 to 1:1.

By controlling the mass ratio of the monomer compound II to the electrolyte, it is possible to control the mass ratio of the polymer Poly in the generated polymer layer to the electrolyte.

In some examples, in the step of coating the reaction mixture on the surface of the lithium-containing layer on at least one side of the negative electrode plate substrate, the coating mode is selected from any one of a coating method, a spray coating method, a spin coating method, and a vapor deposition method.

In some examples, the reaction temperature of the in-situ polymerization is selected from 30°C to 100°C;
preferably, the reaction temperature of the in-situ polymerization is selected from 30°C to 50°C; and
further preferably, the reaction temperature of the in-situ polymerization is selected from 40°C to 60°C.

In some examples, the reaction time of the in-situ polymerization is selected from 0.1 h to 24 h;
preferably, the reaction time of the in-situ polymerization is selected from 0.1 h to 12 h; and
further preferably, the reaction time of the in-situ polymerization is selected from 0.1 h to 2 h.

In some examples, in the step of coating the reaction mixture on the surface of the lithium-containing layer on at least one side of the negative electrode plate substrate, the coating thickness of the reaction mixture is selected from 100 nm to 8 µm;
preferably, the coating thickness of the reaction mixture is selected from 50 nm to 5 µm; and
further preferably, the coating thickness of the reaction mixture is selected from 50 nm to 8 µm.

In some examples, the formed polymer layer is defined in the second aspect of the present application.

In some examples, the negative electrode plate substrate is a pure lithium plate. At this time, a negative electrode current collector may also be additionally introduced into the negative electrode plate of the battery to facilitate the assembly of tabs, or a pure lithium plate covered with a polymer layer may be used as the negative electrode plate.

In some examples, the negative electrode plate substrate further includes a negative electrode current collector. The negative electrode current collector is located on the side of the lithium-containing layer away from the polymer layer.

In some examples, a second negative electrode active material layer is disposed or not disposed between the negative electrode current collector and the lithium-containing layer, and the components in the second negative electrode active material layer and the lithium-containing layer may be the same or different.

The details of one or more examples of the present application are presented in the accompanying drawings and descriptions below. The other features, objectives and advantages of the present application will become apparent from the specification, accompanying drawings and claims.

### DESCRIPTION OF DRAWINGS

In order to better describe and illustrate the embodiments or examples of the applications disclosed here, one or more accompanying drawings can be referred to. The additional details or examples used to describe the accompanying drawings should not be considered as limiting the scope of any of the disclosed applications, the currently described embodiments or examples, and the best understood modes of these applications. Moreover, in all accompanying drawings, the same components are represented by the same reference numerals. It should also be noted that the accompanying drawings are drawn in a simplified form and are only used to facilitate and clarify the explanation of the present invention. Various sizes of each component shown in the accompanying drawings are arbitrary and may be precise or not drawn to the actual scale. For example, in order to make the figures clearer, the sizes of components are appropriately exaggerated in some parts of the accompanying drawings. Unless otherwise specified, components in the figures are not drawn to scale. The present invention does not limit each size of each component. In the drawings:
Fig. 1 is a schematic structural view of a negative electrode plate according to an example of the present application. A polymer layer is disposed on one side of the negative electrode plate.
Fig. 2 is a schematic structural view of a negative electrode plate according to an example of the present application. A polymer layer and a negative electrode current collector are disposed on one side of the negative electrode plate.
Fig. 3 is a schematic structural view of a negative electrode plate according to an example of the present application. A second negative electrode active material layer is also disposed between a lithium-containing layer and a negative electrode current collector.
Fig. 4 is a schematic structural view of a negative electrode plate according to an example of the present application. Polymer layers are disposed on both sides of the negative electrode plate.
Fig. 5 is a schematic structural view of a negative electrode plate according to an example of the present application. Polymer layers are disposed on both sides of the negative electrode plate, and a second negative electrode active material layer is disposed between each of the lithium-containing layers on both sides and a negative electrode current collector.
Fig. 6 is a schematic view of a secondary battery according to an embodiment of the present application.
Fig. 7 is an exploded view of the secondary battery according to the embodiment of the present application as shown in Fig. 6.
Fig. 8 is a schematic view of a battery module according to an embodiment of the present application.
Fig. 9 is a schematic view of a battery pack according to an embodiment of the present application.
Fig. 10 is an exploded view of the battery pack according to the embodiment of the present application as shown in Fig. 9.
Fig. 11 is a schematic view of an electrical apparatus in which a secondary battery according to an embodiment of the present application is used as a power source.

Description of reference numerals: 100. negative electrode plate substrate; 110. negative electrode current collector; 120. second negative electrode active material layer; 130. containing-lithium layer; 200. polymer layer; 1. battery pack; 2. upper box; 3. lower box; 4. battery module; 5. secondary battery; 51. case; 52. electrode assembly; 53. cover plate.

### DETAILED DESCRIPTION

Hereinafter, the embodiments of the lithium coating composition, the negative electrode plate, the electrode assembly, the secondary battery, the battery module, the battery pack, the electrical apparatus, the method and the application of the present application are specifically disclosed by referring to the detailed descriptions of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60-120 and 80-110 are listed for a special parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is an integer such as 2, 3, 4, 5, 6, 7, 8, 9, 10, 11, 12, or the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specified, the terms "include/including" and "comprise/comprising" mentioned in the present application may be open-ended or closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

The present application involves "a plurality of", "multiple", "many times", and the like, which refers to a number greater than or equal to 2 unless otherwise specified. For example, "one or more" represents one or greater than or equal to two.

The terms "its combination", "any combination thereof", "any combination mode thereof", and the like used in this specification include any two of the listed items or all appropriate combination modes of any two or more of the listed items.

In this specification, the term "appropriate" in "appropriate combination mode", "appropriate mode", "any appropriate mode", and the like shall be subject to the technical solution that can implement the present application.

In this specification, the terms "preferably", "better", "excellent" and "appropriate" are only used to describe embodiments or examples with better effects, and it should be understood that they do not constitute a limitation on the protection scope of the present application. If there are multiple "preferably" in a technical solution, and there are no special instructions, contradictions or mutual constraints, each "preferably" is independent.

In the present application, "optionally" means not essential.

In the present application, the terms "further", "more further", "particularly", and the like are used to describe objectives and indicate differences in content, but should not be understood as limiting the protection scope of the present application.

In the present application, the terms "first", "second", "third", "fourth" and the like in "first aspect", "second aspect", "third aspect", "fourth aspect" and the like are only used for descriptive objectives, but cannot be understood as indicating or implying the relative importance or number, or implying the importance or number of the indicated technical features. Moreover, the terms "first", "second", "third", "fourth" and the like only serve as non-exhaustive enumeration and description objectives, and should be understood not to constitute a closed limit on number.

High energy density is an irreversible trend in the development of lithium metal batteries in the future. Lithium metal negative electrodes with high specific capacity (3860 mAh/g) and extremely low potential (-3.04 V vs. H₂/H⁺) have attracted widespread attention in the industry. However, the high reactivity of the lithium metal and the problem of dendrite short circuit greatly limit the further development. The lithium metal has high reactivity and is prone to side reactions with an electrolyte, thus consuming the electrolyte and the lithium metal, generating a thicker passivation layer, and causing rapid decay of battery cycle life. In addition, during charging, lithium ions deposit unevenly due to regional differences in ion current and electron current, resulting in dendrites. On the one hand, lithium dendrites have a higher specific surface area, which may exacerbate the consumption of the electrolyte and even cause a rapid decrease in battery power. On the other hand, the lithium dendrites may penetrate a separator due to rapid growth, which causes a risk of battery short circuit.

A high-elasticity lithium metal protective layer with lithium ion transmission and regulation effects and tightly bonded to the lithium metal may solve the above problems. Firstly, the presence of the protective layer may reduce the direct contact between the electrolyte and the lithium metal, inhibit the occurrence of side reactions, and reduce the consumption of the electrolyte and the lithium metal. Secondly, the higher ion conductivity and functional group design of the protective layer not only can ensure the effective transfer of lithium ions in the protective layer and at the interface with the lithium metal, but also can regulate the uniform deposition of lithium ions, inhibit the generation of lithium dendrites, reduce the consumption of the electrolyte, and prevent dendrites from piercing the separator and causing short circuit. Furthermore, the close bonding between the protective layer and the lithium metal may prevent a coating from peeling off from the surface of the lithium metal due to the volume change of the negative electrode side during charging and discharging.

The inventors of the present application found that the protective layer is currently attached to the surface of the lithium metal through physical coating. The protective layer and the lithium metal are bonded through intermolecular Van der Waals force, and the force is weaker. During a long cycle, due to the volume change of the negative electrode side, the protective layer is easy to detach from the lithium metal. The functional groups contained in the protective layer have no regulatory effect on lithium deposition. In addition, if the protective layer is obtained independently in advance and then attached between the lithium metal and the separator, the operation is complex, and the flatness of a thin layer is difficult to ensure. To ensure better wettability on the surface of the lithium metal, the surface of the lithium metal is coated with a high-viscosity polymer solution, but a thicker protective layer is prepared.

In view of the common technical problems mentioned above, in the first aspect, the present application includes a lithium-containing metal and a polymer Poly chemically connected to a lithium surface in the lithium-containing metal. The polymer Poly has a repeating unit structure formed by cyanoacrylic derivative monomers, and carries a large number of cyano groups and fluorine-substituted aliphatic groups, and at least one cyano group in the polymer Poly forms a chemical connection with lithium in the lithium-containing metal (further, forms a covalent connection).

In some examples, a lithium coating composition is provided, including a lithium-containing metal and a polymer Poly chemically connected to a lithium surface in the lithium-containing metal. The polymer Poly has a structure shown in formula I: 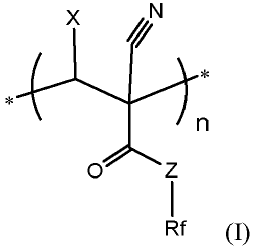 wherein,
each occurrence of Rf is independently a fluorine-substituted aliphatic group;
each occurrence of X is independently H or an electron-withdrawing group;
each occurrence of Z is independently O, S or NR¹¹, wherein R¹¹ is H or C₁₋₃ alkyl;
* indicates a site connecting a terminal group;
n is an integer ≥10; and
at least one cyano group in the polymer Poly forms a chemical connection with lithium in the lithium-containing metal (further, forms a covalent connection).

In a main chain of the polymer Poly, the carbon atoms connected to the side group of Rf are also connected with cyano groups. The inventors found that the cyano group at this site is conducive to the polymerization reaction of cyanoacrylic derivative monomers because the cyano group is an electron-withdrawing group. During the polymerization reaction, carbon atoms connected to cyano groups may form relatively stable anionic active centers to continue chain growth until the chain terminates.

In the present application, the term "lithium-containing metal" may be essentially composed of a lithium (Li) metal, may be a lithium alloy, or may be a combination containing a lithium metal and a lithium alloy. "Essentially composed of a lithium metal" indicates that the weight proportion of metallic lithium is very high. The proportion described by "essentially" here may be greater than 80%, greater than 85%, greater than 90%, greater than 95%, greater than 96%, greater than 97%, greater than 98%, greater than 99%, 100%, or the like.

In the present application, the term "lithium metal" or "metallic lithium" refers to lithium in a metallic state.

In the present application, the term "lithium" used independently refers to lithium in a metallic state, unless otherwise specified, such as "lithium" in a lithium-containing metal.

In the present application, the term "lithium alloy" refers to a lithium-containing alloy. In addition to lithium, the lithium alloy may also contain one or more other types of metals. The reported lithium alloys used as negative electrode active materials in lithium metal batteries belong to the scope of the present application. For example, the lithium alloy may be an alloy containing lithium and one or more metals selected from silver, magnesium, aluminum, gold, zinc, tin, copper, nickel and titanium. Non-restrictive examples of lithium alloys may be lithium-magnesium alloys and lithium-aluminum alloys. In the present application, the "chemical connection" between cyano and lithium refers to the covalent connection, unless otherwise specified.

In the present application, the term "cyanoacrylic derivative monomer" refers to a derivative with a skeleton shown in 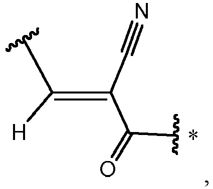 and the "*" labeled end may be connected to the above-mentioned fluorine-substituted aliphatic groups through ester groups, amide groups and other linking groups. In the present application, the term "aliphatic group" refers to a group containing at least one carbon atom and no aromatic group, and when the aliphatic group only contains one carbon atom, the carbon atom is connected to four adjacent atoms through four single bonds (i.e. excluding substituted methylene groups such as carbonyl groups). The aliphatic group is allowed to contain one or more heteroatoms. Examples of heteroatoms include, but are not limited to, fluorine, iodine, nitrogen, oxygen, sulfur, silicon, boron and phosphorus.

The aliphatic group may be aliphatic hydrocarbyl, aliphatic hydrocarbyl in which one or more hydrogen atoms may be independently substituted by non-fluorine heteroatoms, or aliphatic hydrocarbyl in which one or more carbon atoms may be independently substituted by heteroatoms. It is allowed to perform substitution of hydrogen atoms and substitution of carbon atoms simultaneously.

In the present application, the term "hydrocarbyl" refers to a monovalent group composed of carbon and hydrogen elements. The hydrocarbyl may be in the form of alkyl, alkenyl, alkynyl, or the like.

In the present application, the term "alkyl" refers to a monovalent residue formed by loss of one hydrogen atom from a saturated hydrocarbon containing primary carbon atoms, secondary carbon atoms, tertiary carbon atoms, quaternary carbon atoms, or a combination thereof. A phrase containing this term, such as "C₁ to ₁₀ alkyl" refers to alkyl containing 1 to 10 carbon atoms, which may be independently C₁ alkyl, C₂ alkyl, C₃ alkyl, C₄ alkyl, C₅ alkyl, C₆ alkyl, C₇ alkyl, C₈ alkyl, C₉ alkyl, or C₁₀ alkyl during each occurrence. Examples of appropriate alkyl include but are not limited to: methyl (Me, -CH₃), ethyl (Et, -CH₂CH₃), 1-propyl (n-Pr, n-propyl, -CH₂CH₂CH₃), 2-propyl (i-Pr, i-propyl, -CH(CH₃)₂), 1-butyl (n-Bu, n-butyl, - CH₂CH₂CH₂CH₃), 2-methyl-1-propyl (i-Bu, i-butyl, -CH₂CH(CH₃)₂), 2-butyl (s-Bu, s-butyl, - CH(CH₃)CH₂CH₃), 2-methyl-2-propyl (t-Bu, t-butyl, -C(CH₃)₃), 1-pentyl (n-pentyl, - CH₂CH₂CH₂CH₂CH₃), 2-pentyl (-CH(CH3)CH2CH2CH3), 3-pentyl (-CH(CH₂CH₃)₂), 2-methyl-2-butyl (-C(CH₃)₂CH₂CH₃), 3-methyl-2-butyl (-CH(CH₃)CH(CH₃)₂), 3-methyl-1-butyl (-CH₂CH₂CH(CH₃)₂), 2-methyl-1-butyl (-CH₂CH(CH₃)CH₂CH₃), 1-hexyl (-CH₂CH₂CH₂CH₂CH₂CH₃), 2-hexyl (-CH(CH₃)CH₂CH₂CH₂CH₃), 3-hexyl (-CH(CH₂CH₃)(CH₂CH₂CH₃)), 2-methyl-2-pentyl (-C(CH₃)₂CH₂CH₂CH₃), 3-methyl-2-pentyl (-CH(CH₃)CH(CH₃)CH₂CH₃), 4-methyl-2-pentyl (-CH(CH₃)CH₂CH(CH₃)₂), 3-methyl-3-pentyl (-C(CH₃)(CH₂CH₃)₂), 2-methyl-3-pentyl (-CH(CH₂CH₃)CH(CH₃)₂), 2,3-dimethyl-2-butyl (-C(CH₃)₂CH(CH₃)₂), 3,3-dimethyl-2-butyl (-CH(CH₃)C(CH₃)₃, and octyl (-(CH₂)₇CH₃).

In the present application, the term "alkenyl" refers to a monovalent residue formed by loss of one hydrogen atom from a hydrocarbon containing at least one unsaturated site (that is, carbon-carbon sp² double bond). A phrase containing this term, such as "C₂ to C₁₀ alkenyl" or "C₂ to ₉ alkenyl" refers to alkenyl containing 2-9 carbon atoms, which may be independently C₂ alkenyl, C₃ alkenyl, C₄ alkenyl, C₅ alkenyl, C₆ alkenyl, C₇ alkenyl, C₈ alkenyl, C₉ alkenyl, or C₁₀ alkenyl during each occurrence. Appropriate examples include but are not limited to: ethenyl (-CH=CH₂), allyl (-CH₂CH=CH₂), cyclopentenyl (-C₅H₇), and 5-hexenyl (-CH₂CH₂CH₂CH₂CH=CH₂).

In the present application, the term "alkynyl" refers to a monovalent residue formed by loss of one hydrogen atom from a hydrocarbon containing at least one unsaturated site (that is, carbon-carbon sp triple bond). A phrase containing this term, such as "C₂ to C₁₀ alkynyl" refers to alkynyl containing 2-9 carbon atoms, which may be independently C₂ alkynyl, C₃ alkynyl, C₄ alkynyl, C₅ alkynyl, C₆ alkynyl, C₇ alkynyl, C₈ alkynyl, C₉ alkynyl, or C₁₀ alkynyl during each occurrence. Appropriate examples include but are not limited to: ethynyl (-C=CH) and propargyl (-CH₂C≡CH).

In the present application, the terminal group of the involved polymer Poly refers to the terminal group formed by the polymerization reaction of carbon-carbon double bonds, unless otherwise specified. Types are related to factors such as used initiators and capping groups in termination reactions. When "*" is used to describe the terminal group of the polymer Poly, it can be understood in conjunction with the related descriptions of polymer reactions in the present application, and those skilled in the art can correctly understand the structure of the polymer Poly.

In some examples, Rf is fluorine-substituted hydrocarbyl.

In some examples, Rf is fluorine-substituted alkyl.

In some examples, Rf is fluorine-substituted alkenyl.

In some examples, Rf is fluorine-substituted alkynyl.

In the lithium coating composition, the polymer Poly forms a dense and uniform polymer layer on the surface of the lithium-containing metal, which can play a role of a protective layer at the negative electrode of a lithium metal battery, effectively inhibit the contact reaction between the electrolyte and lithium, reduce the consumption of the electrolyte and lithium, improve the coulombic efficiency, and prolong the cycle life. The polymer Poly carries a large number of cyano groups, and one or more of the cyano groups can form stable chemical connections (covalent connections) with lithium in the lithium-containing metal, so as to firmly bind the polymer layer to the surface of the lithium-containing metal. Therefore, when the volume of the negative electrode side changes during charging and discharging, the polymer layer can be prevented from peeling off from the surface of the lithium-containing metal. The aliphatic groups containing a large number of fluorine substituents in the polymer Poly serve as side groups. On the one hand, the aliphatic side groups with certain lengths can enhance the elasticity of the polymer layer and prevent the polymer layer from breaking under large volume deformation. On the other hand, the introduction of the fluorine element can effectively regulate the uniform deposition of lithium ions, improve the deposition morphology of lithium dendrites in lithium metal batteries at a certain charging current density, inhibit the formation of lithium dendrites, and alleviate the volume expansion of the lithium negative electrode side. In addition, the dense and uniform polymer layer can also be swelled by the electrolyte, and can provide better ion conductivity (such as 10⁻³ S/cm) after swelling, thereby ensuring efficient transfer of lithium ions in the polymer layer and at the lithium interface, and greatly reducing the interface polarization of a battery cell.

In some examples, each time Rf appears, the fluorine substitution rate in Rf independently satisfies >50%.

In some examples, the fluorine substitution rate in Rf independently satisfies ≥55%.

In some examples, the fluorine substitution rate in Rf independently satisfies ≥65%.

In some examples, the fluorine substitution rate in Rf independently satisfies ≥70%.

In some examples, the fluorine substitution rate in Rf independently satisfies ≥80%.

In some examples, at least 50% of the Rf in the polymer Poly satisfies a fluorine substitution rate ≥80%, or ≥90%.

In some examples, at least 60% of the Rf in the polymer Poly satisfies a fluorine substitution rate ≥70%, >_80%, or ≥90%.

In some examples, at least 70% of the Rf in the polymer Poly satisfies a fluorine substitution rate ≥60%, ≥70%, ≥80%, or ≥90%.

In some examples, at least 80% of the Rf in the polymer Poly satisfies a fluorine substitution rate ≥50%, >_60%, >_70%, >_80%, or ≥90%.

In the present application, for percentage intervals defined by "≥", such as ≥50% and ≥60%, if there are no other limitations, the upper limit is 100%, that is, >_50% and ≥60% respectively have the same meanings as 50% to 100% and 60% to 100%.

In the present application, the "fluorine substitution rate in Rf" is a molar ratio of fluorine atoms, calculated based on the number of hydrogen atoms that can be substituted in the Rf group. The "number of hydrogen atoms that can be substituted" may be understood as the number of sites that can be substituted in the Rf group, that is, the maximum number of hydrogen atoms that can be connected to carbon atoms and possible heteroatoms (such as phosphorus atoms, nitrogen atoms, and sulfur atoms). The hydrogen atoms may also be substituted by other elements (at this time, the sites occupied by other elements are also included in the base number).

The fluorine substitution rate in Rf may also be selected from any one of the following percentages or an interval formed by any two percentages: 30%, 35%, 40%, 45%, 50%, 55%, 60%, 65%, 70%, 75%, 80%, 90%, 95%, 96%, 97%, 98%, 99%, 100%. Non-restrictive examples of the interval formed by any two percentages may be 30% to 100%, 35% to 100%, or the like.

In some examples, each time Rf appears, the number of fluorine atoms in Rf is independently an integer ≥4.

In some examples, the number of fluorine atoms in Rf is independently an integer selected from 4 to 20.

In some examples, the number of fluorine atoms in Rf is independently an integer selected from 4 to 16.

In some examples, the number of fluorine atoms in Rf is independently an integer selected from 4 to 15.

In some examples, the number of fluorine atoms in Rf is independently an integer selected from 4 to 13.

In some examples, the number of fluorine atoms in Rf is independently an integer selected from 4 to 10.

In some examples, the number of fluorine atoms in Rf is 4, 5, 6, 7, 8, 9, 10, 11, 12 or 13 independently.

The number of fluorine atoms in Rf may also be selected from any one of the following values or an interval formed by any two values: 4, 5, 6, 7, 8, 9, 10, 11, 12, 13, 14, 15, 16, 17, 18, 19, 20, or the like. Non-restrictive examples of the interval formed by any two values may be 4 to 20, 4 to 16, or the like.

In some examples, the mass proportion of fluorine element in the polymer Poly is selected from 30% to 55%.

In some examples, the mass proportion of fluorine element in the polymer Poly is selected from 35% to 55%.

In some examples, the mass proportion of fluorine element in the polymer Poly is selected from 30% to 50%.

The mass proportion of fluorine element in the polymer Poly may also be selected from any one of the following percentages or an interval formed by any two percentages: 30%, 35%, 40%, 45%, 50%, and 55%. Non-restrictive examples of the interval formed by any two percentages may be 30% to 50%, or the like.

By means of one or more modes of controlling the fluorine substitution rate in Rf, controlling the number of fluorine atoms in Rf, and controlling the mass proportion of the fluorine element in the polymer Poly, the uniform deposition of lithium ions can be better regulated, the formation of lithium dendrites can be inhibited, the cycle life of lithium ions can be prolonged, the risk of short circuits can be reduced, and the volume expansion of the lithium negative electrode side can be alleviated. Taking the control of the mass proportion of fluorine element in the polymer Poly as an example, it is beneficial to improve the deposition morphology of lithium dendrites in lithium metal batteries and alleviate the volume expansion of lithium negative electrodes at a certain charging current density.

In some examples, each time Rf appears, Rf contains 2 to 10 main chain carbon atoms.

In some examples, Rf contains 3 to 10 main chain carbon atoms.

In some examples, Rf contains 3 to 8 main chain carbon atoms.

In some examples, Rf contains 3, 4, 5, 6, 7 or 8 main chain carbon atoms.

In some examples, each time Rf appears, the number of carbon atoms in Rf is an integer selected from 2 to 10.

In some examples, the number of carbon atoms in Rf is an integer selected from 3 to 10.

In some examples, the number of carbon atoms in Rf is an integer selected from 3 to 8.

In some examples, the number of carbon atoms in Rf is 3, 4, 5, 6, 7 or 8.

In some examples, according to the number of carbon atoms in Rf, Rf is a fluorine-substituted C₂₋₁₀ aliphatic group, and the number of carbon atoms may be selected from any one of the following values or an interval formed by any two values, such as 2, 3, 4, 5, 6, 7, 8, 9 or 10.

In some examples, Rf is fluorine-substituted C₂₋₁₀ hydrocarbyl. C₂₋₁₀ hydrocarbyl may be, but is not limited to, C₂₋₁₀ alkyl, C₂₋₁₀ alkenyl, C₂₋₁₀ alkynyl, or the like.

In some examples, Rf is fluorine-substituted C₂₋₁₀ alkyl. The number of carbon atoms may be selected from any one of the following values or an interval formed by any two values, such as 2, 3, 4, 5, 6, 7, 8, 9 and 10.

In some examples, C₂₋₁₀ alkyl may be, but is not limited to, ethylpropyl, butyl, pentyl, hexyl, heptyl, octyl, isopropyl, isobutyl, tert-butyl, isopentyl, tert-pentyl, neopentyl, 2-methylpentyl, 3-methylpentyl, 2,2-dimethylbutyl, 2,3-dimethylbutyl, 2-methylhexyl, 3-methylhexyl, 2,2-dimethylpentyl, 3,3-dimethylpentyl, 2,3-dimethylpentyl, 2,4-dimethylpentyl, 3-ethylpentyl, 2,2,3-trimethylbutyl, 2-methylheptyl, 3-methylheptyl, 4-methylheptyl, 2,2-dimethylhexyl, 3,3-dimethylhexyl, 2,3-dimethylhexyl, 2,4-dimethylhexyl, 2,5-dimethylhexyl, 3,4-dimethylhexyl, 3-ethylhexyl, 2,2,3-trimethylpentyl, 2,2,4-trimethylpentyl, 2,3,3-trimethylpentyl, 2,3,4-trimethylpentyl, 2-methyl-3-ethylpentyl, 3-methyl-3-ethylpentyl, 2,2,3,3-tetramethylbutyryl, nonyl, decyl, or the like.

In some examples, Rf is fluorine-substituted C₂₋₁₀ alkenyl. The number of carbon atoms may be selected from any one of the following values or an interval formed by any two values, such as 2, 3, 4, 5, 6, 7, 8, 9 and 10.

In some examples, C₂₋₁₀ alkenyl may be, but is not limited to, ethenyl, propenyl, butenyl, butadienyl, pentenyl, pentadienyl, hexenyl, or the like.

In some examples, Rf is fluorine-substituted C₂₋₁₀ alkynyl. The number of carbon atoms may be selected from any one of the following values or an interval formed by any two values, such as 2, 3, 4, 5, 6, 7, 8, 9 and 10.

In some examples, C₂₋₁₀ alkynyl may be, but is not limited to, ethynyl, propinyl, butynyl, butadiynyl, pentynyl, pentadienyl, hexynyl, or the like.

By controlling main chain carbon atoms in Rf, the length of the side group of Rf may further be adjusted by controlling the number of carbon atoms in Rf, so as to endow the polymer layer with appropriate elasticity, and better prevent the polymer layer from breaking under large volume deformation.

In some examples, each time Rf appears, Rf further contains one or more heteroatoms selected from the group consisting of iodine, nitrogen, oxygen, sulfur, silicon, boron and phosphorus.

In some examples, each time Rf appears, the number of any one of the heteroatoms in Rf is 1 or more.

In some examples, the number of any one of the heteroatoms in Rf is selected from 1 to 5.

In some examples, the number of any one of the heteroatoms in Rf is selected from 1, 2, 3 or 4.

In some examples, each time Rf appears, the number of the heteroatoms in Rf satisfies one or more of the following:
the number of oxygen atoms in Rf is 1, 2, 3, 4 or 5;
the number of nitrogen atoms in Rf is 1, 2 or 3;
the number of sulfur atoms in Rf is 1, 2 or 3;
the number of phosphorus atoms in Rf is 1 or 2;
the number of iodine atoms in Rf is 1, 2, 3, 4, 5 or 6;
the number of silicon atoms in Rf is 1 or 2; and
the number of boron atoms in Rf is 1 or 2.

In some examples, the number of oxygen atoms in Rf is 1, 2, 3, 4 or 5.

In some examples, the number of nitrogen atoms in Rf is 1, 2 or 3.

In some examples, the number of sulfur atoms in Rf is 1, 2 or 3.

In some examples, the number of phosphorus atoms in Rf is 1 or 2.

In some examples, the number of iodine atoms in Rf is 1, 2, 3, 4, 5 or 6.

In some examples, the number of silicon atoms in Rf is 1 or 2.

In some examples, the number of boron atoms in Rf is 1 or 2.

In some examples, each time Rf appears, Rf contains one or more atoms or atomic groups selected from the group consisting of iodine groups, -NR¹²-, -O-, -S-, - S(O)₂-, >Si<, >B- and >P(=O)-, wherein R¹² is H or C₁₋₃ alkyl.

In some examples, R¹² is H or methyl.

In some examples, R¹² is H.

In some examples, each time Rf appears, Rf contains one or more atoms or atomic groups selected from the group consisting of -O-, -S(O)₂- and -(O=)P(O-)₂.

In some examples, Rf contains one or more -O-.

In some examples, Rf contains -S(O)₂F.

In some examples, Rf contains -(O=)P(O-)₂.

In the present application, the term "atomic group" refers to a group with two or more atoms.

By introducing heteroatoms other than fluorine atoms into Rf, such as one or more heteroatoms of iodine, nitrogen, oxygen, sulfur, silicon, boron and phosphorus, special properties can be endowed to the polymer layer. For example, phosphorus element has a certain flame retardant effect. For another example, iodine element can also play a certain role in regulating the deposition of lithium ions. For another example, the sulfonyl fluoride group has a certain positive effect on improving the ion conductivity of the polymer layer.

In some examples, each occurrence of the fluorine-substituted aliphatic group is independently a straight chain structure or a branched chain structure. For example, each occurrence of fluorine-substituted hydrocarbyl (such as fluorine-substituted C₂₋₁₀ hydrocarbyl), fluorine-substituted alkyl (such as fluorine-substituted C₂₋₁₀ alkyl), fluorine-substituted alkenyl (such as fluorine-substituted C₂₋₁₀ alkenyl), fluorine-substituted alkynyl (such as fluorine-substituted C₂₋₁₀ alkynyl), or the like may be independently a straight chain structure, branched chain structure or ring-containing structure, but preferably a straight chain structure or branched chain structure.

Straight chain Rf is beneficial to improve the flexibility of polymer materials. Branched chain Rf is beneficial to improve the swelling ability of an electrolyte membrane, thereby improving the ion conductivity.

In some examples, each occurrence of the fluorine-substituted aliphatic group is independently a saturated structure or an unsaturated structure.

In some examples, the fluorine-substituted aliphatic group contains one or more unsaturated bonds selected from the group consisting of carbon-carbon double bonds and carbon-carbon triple bonds.

In some examples, Rf is fluorine-substituted C₂₋₁₀ alkenyl. See the definition above.

In some examples, Rf is fluorine-substituted C₂₋₁₀ alkynyl. See the definition above.

When the fluorine-substituted aliphatic group has a saturated structure, the molecular chain of the polymer Poly may be endowed with better flexibility, which is beneficial for improving the elastic regulation of the polymer layer; a ring with certain rigidity is introduced into Rf, which may more flexibly regulate the elasticity of the molecular chain by adjusting the ratio of soft and hard segments; and furthermore, partially unsaturated bonds are introduced into Rf to prepare a polymer protective layer with a highly cross-linked structure, which is beneficial for improving the elastic modulus of the material.

In some examples, each time Rf appears, the structure of Rf is independently shown in Formula III-1, Formula III-2 or Formula III-3: 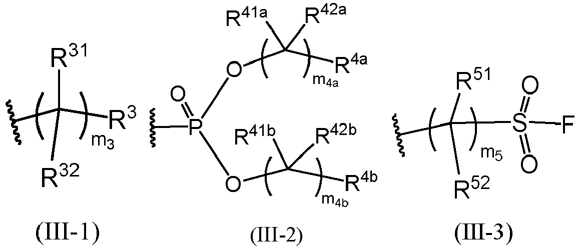 wherein each occurrence of R³¹, R³² and R³ is independently H or F; each occurrence of m₃ is independently an integer selected from 2 to 10; Formula III-1 contains at least 4 F atoms;
preferably, m₃ is an integer selected from 3 to 10 (such as 3, 4, 5, 6, 7, 8, 9, or 10);
further preferably, m₃ is an integer selected from 3 to 8;
further preferably, m₃ is 3, 4, 5, 6, 7 or 8;
each occurrence of R^{41a}, R^{42a}, R^{4a}, R^{41b}, R^{42b} and R^{4b} is independently H or F; each occurrence of m₄ₐ and m4_{4b} is independently an integer selected from 1 to 9; Formula III-2 contains at least 4 F atoms;
preferably, m₄ₐ and m4_{4b} are each independently an integer selected from 2 to 9 (such as 2, 3, 4, 5, 6, 7, 8, or 9);
further preferably, m₄ₐ and m4_{4b} are each independently an integer selected from 2 to 8;
further preferably, m₄ₐ and m4_{4b} are each independently an integer selected from 3 to 8;
further preferably, m₄ₐ and m4_{4b} are each independently an integer selected from 3 to 6;
each occurrence of R⁵¹ and R⁵² is independently H or F; each occurrence of m₅ is independently an integer selected from 2 to 10; Formula III-3 contains at least 4 F atoms;
preferably, m₅ is an integer selected from 3 to 10 (such as 3, 4, 5, 6, 7, 8, 9 or 10);
further preferably, m₅ is an integer selected from 3 to 8; and
further preferably, m₅ is 3, 4, 5, 6, 7 or 8.

In some examples, each occurrence of R³¹, R³² and R³ is F.

In some examples, each occurrence of m₃ is independently an integer selected from 2 to 10.

In some examples, m₃ is an integer selected from 3 to 10 (such as 3, 4, 5, 6, 7, 8, 9 or 10).

In some examples, m₃ is an integer selected from 3 to 8.

In some examples, m₃ is 3, 4, 5, 6, 7, or 8.

In some examples, each occurrence of R^{41a}, R^{42a}, R^{4a}, R^{41b}, R^{42b} and R^{4b} is F.

In some examples, m₄ₐ and m4_{4b} are each independently an integer selected from 2 to 9 (such as 2, 3, 4, 5, 6, 7, 8 or 9).

In some examples, m₄ₐ and m4_{4b} are each independently an integer selected from

2 to 8.

In some examples, m₄ₐ and m4_{4b} are each independently an integer selected from 3 to 8.

In some examples, m₄ₐ and m4_{4b} are each independently an integer selected from 3 to 6.

In some examples, each occurrence of R⁵¹ and R⁵² is F.

In some examples, m₅ is an integer selected from 3 to 10 (such as 3, 4, 5, 6, 7, 8, 9 or 10).

In some examples, m₅ is an integer selected from 3 to 8.

In some examples, m₅ is 3, 4, 5, 6, 7 or 8.

In some examples, each time Rf appears, the structure of Rf is shown in Formula III-1.

In some examples, each time Rf appears, the structure of Rf is shown in Formula III-2.

In some examples, each time Rf appears, the structure of Rf is shown in Formula III-3 .

The structure shown in Formula III-1 is a linear saturated fluorinated aliphatic chain. On the one hand, better elasticity can be endowed to the polymer layer to prevent the polymer layer from breaking under large volume deformation. On the other hand, fluorine element can effectively regulate the uniform deposition of lithium ions, inhibit the formation of lithium dendrites, and alleviate the volume expansion of the lithium negative electrode side.

The structure shown in Formula III-2 may introduce phosphorus element, wherein the phosphate ester group has a flame retardant effect, which is beneficial for improving the safety performance of the battery cell.

The structure shown in Formula III-3 may introduce a sulfonyl fluoride group, which has a certain positive effect on improving the ion conductivity of the polymer layer.

In some examples, each time Formula III-1 appears, the number of H atoms is 0, 1, 2, 3 or 4.

In some examples, each time Formula III-1 appears, the number of H atoms is 0.

In some examples, each time Formula III-2 appears, the number of H atoms is 0, 1, 2, 3, 4, 5 or 6.

In some examples, each time Formula III-2 appears, the number of H atoms is 0.

In some examples, each time Formula III-3 appears, the number of H atoms is 0, 1, 2, 3 or 4.

In some examples, each time Formula III-3 appears, the number of H atoms is 0.

By controlling the number of H atoms, it is possible to regulate the number of sites available for fluorine substitution.

In some examples, each occurrence of Rf is independently selected from any one of the following structures:

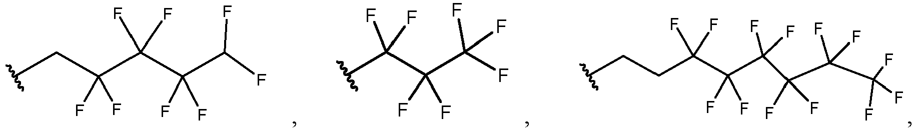

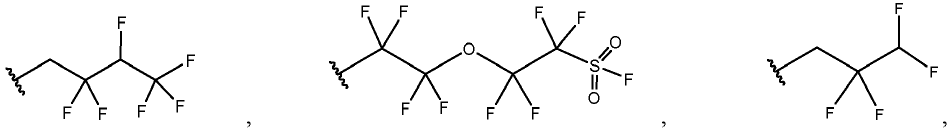

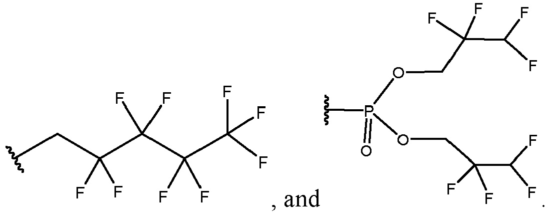

In some examples, each occurrence of X is independently H or an electron-withdrawing group containing 1 to 6 non-hydrogen atoms, wherein the number of non-hydrogen atoms may be selected from any one of the following values or an interval formed by any two values: 1, 2, 3, 4, 5, and 6.

In some examples, each occurrence of X is independently H or cyano, nitro or - NR²¹R²², wherein R²¹ and R²² are each independently H or C₁₋₃ alkyl.

In some examples, R²¹ and R²² are each independently H or methyl.

In some examples, R²¹ and R²² are both methyl.

An electron-withdrawing group (such as cyano) is introduced at a site X, which is beneficial for promoting the increase in reactivity of carbon-carbon double bonds in cyanoacrylic derivative monomers during the formation of a polymer layer, thereby promoting the in-situ polymerization reaction.

In some examples, each occurrence of Z is independently O, S or NH.

In some examples, each occurrence of Z is independently O or NH.

In some examples, each occurrence of Z is O.

In some examples, each occurrence of Z is NH.

The linking group Z can form reactive functional group pairs with different reactive functional groups through -COOH in cyanoacrylic derivative monomers or derived reactive forms thereof (such as the form of acyl chloride, and the activated form of the N-succinimide ester group of carboxyl), so as to generate different types of chemical bonds through coupling reactions. For example, when Z is O, S or NH, it can be obtained through the coupling reaction of -COOH in cyanoacrylic derivative monomers or derived reactive forms thereof with -OH, -SH, and -NH₂. The diversification of Z is the result of the flexible matching reaction of reactive monomers.

In some embodiments, Rf in Formula I is the same; each occurrence of X in Formula I is the same; and each occurrence of Z in Formula I is the same. At this time, a single type of monomer (Formula (II)) can be used for a polymerization reaction.

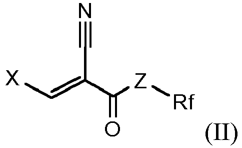

In some examples, the general structure of the polymer Poly may be selected from the structure formed by polymerization of any monomer polymer in Table 1. The molecular weight may be the same with or different from that of the polymers in Table 1.

Taking the monomer 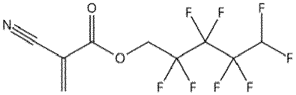 corresponding to Example 1 in Table 1 as an example, the structure formed by polymerization is: in Formula I, X is H, Z is O, and Rf is

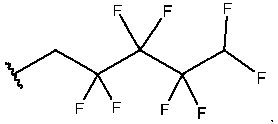

In some examples, in Formula I, X is -N(CH₃)₂, Z is O, and Rf is

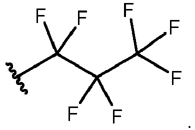

In some examples, in Formula I, X is -NO₂, Z is O, and Rf is

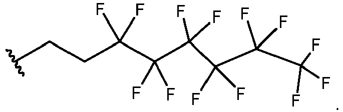

In some examples, in Formula I, X is H, Z is O, and Rf is

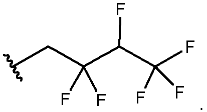

In some examples, in Formula I, X is H, Z is O, and Rf is

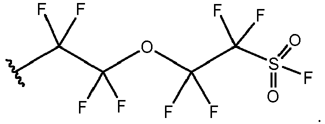

In some examples, in Formula I, X is H, Z is O, and Rf is

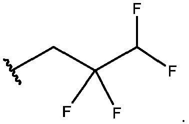

In some examples, in Formula I, X is H, Z is NH, and Rf is

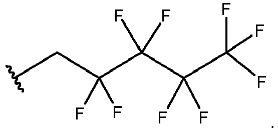

In some examples, in Formula I, X is H, Z is O, and Rf is

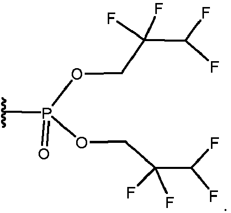

In some examples, n is an integer selected from 10 to 1000, further preferably an integer selected from 10 to 950, further preferably an integer selected from 10 to 800, further preferably an integer selected from 15 to 800, further preferably an integer selected from 20 to 800, further preferably an integer selected from 40 to 800, further preferably an integer selected from 50 to 800, further preferably an integer selected from 100 to 800, further preferably an integer selected from 10 to 750, further preferably an integer selected from 15 to 750, further preferably an integer selected from 20 to 750, further preferably an integer selected from 40 to 750, further preferably an integer selected from 50 to 750, further preferably an integer selected from 80 to 750, further preferably an integer selected from 100 to 750, further preferably an integer selected from 10 to 650, further preferably an integer selected from 15 to 650, further preferably an integer selected from 20 to 650, further preferably an integer selected from 40 to 650, further preferably an integer selected from 50 to 650, further preferably an integer selected from 100 to 650, further preferably an integer selected from 150 to 500, and further preferably an integer selected from 200 to 350.

In some examples, n may be selected from any one of the following values or an interval formed by any two values: 10, 20, 30, 40, 50, 60, 70, 80, 100, 150, 200, 250, 300, 400, 500, 600, 700, 800, 850, 900, 950, 1000, and the like.

In some examples, the number average molecular weight of the polymer Poly is selected from 10 kDa to 200 kDa.

In some examples, the number average molecular weight of the polymer Poly is selected from 50 kDa to 100 kDa.

In some examples, the number average molecular weight of the polymer Poly may be selected from any one of the following molecular weights or an interval formed by any two molecular weights (unit: kDa): 10, 11, 12, 13, 14, 15, 16, 17, 18, 19, 20, 22, 25, 26, 28, 30, 35, 40, 44, 45, 46, 48, 50, 55, 60, 65, 70, 75, 80, 85, 90, 95, 100, 110, 120, 130, 140, 150, 160, 170, 180, 190, 200, and the like.

n in Formula I is numerically equal to the degree of polymerization of the polymer Poly. The regulation of the molecular weight of the polymer Poly can be realized by controlling n. By adjusting the degree of polymerization or molecular weight, the molecular chain length of the polymer Poly can be adjusted, which not only achieves effective coating of the lithium-containing metal, but also maintains stable chemical connections, and can also affect the density and uniformity of the polymer layer.

In some examples, the content of lithium in the lithium-containing metal relative to the polymer Poly is greater than the catalyst dosage, measured in a molar ratio.

In the coating composition, as long as the lithium-containing metal can provide a catalyst dosage, it can smoothly catalyze the in-situ polymerization reaction of cyanoacrylic derivative monomers on the surface of the lithium metal.

In some examples, the lithium-containing metal includes a lithium metal or a lithium alloy.

The lithium metal has the highest specific capacity (3860 mAh/g) and the lowest electrochemical potential (-3.04V, relative to a standard hydrogen electrode) in all negative electrode materials of lithium-based batteries, and is an excellent negative electrode material for lithium metal batteries, which is beneficial for achieving high energy density.

In some examples, the lithium alloy contains lithium, and also contains one or more of silver, magnesium, aluminum, gold, zinc, tin, copper, nickel and titanium.

A **second aspect of** the present application provides a negative electrode plate, wherein the negative electrode plate includes a negative electrode plate substrate and a polymer layer which are stacked. The negative electrode plate substrate includes a lithium-containing layer in contact with the polymer layer, the lithium-containing layer contains lithium, and the polymer layer is chemically connected to at least a portion of lithium in the lithium-containing layer;

wherein the polymer layer includes the polymer Poly defined in the first aspect of the present application.

In the present application, the "negative electrode plate substrate" can provide negative electrode active materials for lithium metal batteries. The negative electrode plate substrate in the negative electrode plate at least includes a lithium-containing layer in contact with the polymer layer, that is, the lithium-containing layer is located at the outermost layer of the negative electrode plate substrate. In other words, the outermost layer on at least one side of the negative electrode plate substrate is a lithium-containing layer. In an example, the negative electrode plate substrate is composed of a lithium-containing layer. The polymer layer is chemically connected to at least a portion of lithium in the lithium-containing layer. Further, the "chemical connection" here refers to the covalent connection. The thickness of the negative electrode plate substrate may be the thickness of a lithium negative electrode in an ordinary lithium metal battery. The thickness of the "lithium negative electrode" here refers to the thickness of a negative electrode active material layer provided by a lithium metal or a lithium alloy. The non-restrictive thickness of the lithium-containing layer may be 5 µm to 40 µm. The thickness of the lithium-containing layer may also be selected from any one of the following thicknesses or an interval formed by any two thicknesses: 6 µm, 7 µm, 8 µm, 9 µm, 10 µm, 15 µm, 20 µm, 25 µm, 30 µm, 40 µm, or the like.

In the present application, the term "lithium-containing layer" refers to a structural layer containing metallic lithium. The lithium-containing layer may be essentially composed of a lithium (Li) metal, may be a lithium alloy, or may be a combination containing a lithium metal and a lithium alloy (such as a combination essentially composed of a lithium metal and a lithium alloy). Lithium in the lithium-containing layer may play multiple roles: on the one hand, lithium may catalyze the in-situ polymerization reaction of cyanoacrylic derivative monomers; on the other hand, lithium may form stable covalent connections with cyano groups carried by the polymer Poly; and moreover, lithium may also serve as a lithium source for negative electrode active materials. The thickness of the lithium-containing layer may be any appropriate thickness, as long as it is sufficient to provide a catalyst dosage that may support the in-situ polymerization reaction of cyanoacrylic derivative monomers. For example, the thickness of the lithium-containing layer may also be the thickness of a lithium negative electrode in an ordinary lithium metal battery. When the lithium-containing layer is thinner, a second negative electrode active material layer may also be disposed on the side of the lithium-containing layer away from the polymer layer. At this time, the negative electrode plate substrate includes the lithium-containing layer and the second negative electrode active material layer. The compositions and contents of the lithium-containing layer and the second negative electrode active material layer may be the same or different.

A dense and uniform polymer layer is formed on the surface of the lithium-containing layer on the surface of at least one side of the negative electrode plate, which can play a role of a protective layer at the negative electrode of a lithium metal battery, effectively inhibit the contact reaction between the electrolyte and lithium, reduce the consumption of the electrolyte and lithium, improve the coulombic efficiency, and prolong the cycle life.

In some examples, the content of lithium in the lithium-containing layer relative to the polymer Poly is greater than the catalyst dosage, measured in a molar ratio. Usually, sufficient lithium (much greater than the catalyst dosage) needs to be provided in the negative electrode plate to significantly increase the energy density of the battery cell, also ensure the first coulombic efficiency of the negative electrode, and reduce or avoid the lithium consumption of the positive electrode.

In some examples, the lithium-containing layer includes a lithium metal or a lithium alloy.

In some examples, the lithium alloy contains lithium, and also contains one or more of silver, magnesium, aluminum, gold, zinc, tin, copper, nickel and titanium.

In some examples, the polymer layer further contains an electrolyte. At this time, it is beneficial to provide better ion conductivity.

In some examples, the electrolyte contains a lithium salt and an electrolyte solvent.

In some examples, the lithium salt is selected from one or more of lithium hexafluorophosphate (LiPF₆), lithium tetrafluoroborate (LiBF₄), lithium bis(fluorosulfonyl)imide (LiFSI), lithium bis(trifluoromethanesulfonyl)imide (LiTFSI), lithium difluoro(oxalato)borate (LiDFOB), lithium perchlorate (LiClO₄), and lithium bis(oxalate)borate (LiBOB).

In some examples, the electrolyte solvent is selected from one or more of ethylene carbonate (EC), propylene carbonate (PC), dimethyl carbonate (DMC), diethyl carbonate (DEC), ethyl methyl carbonate (EMC), dipropyl carbonate (DPC), diphenyl carbonate (DPhC), dibutyl carbonate (DBC), butene carbonate (BC), dimethoxyethane (DME), tetrahydrofuran (THF), dioxolane (DOL), methyl 9-fluoro-n-butyl ether (MFE), 1,1,2,2-tetrafluoroethyl-2,2,3,3-tetrafluoropropyl ether (HFE-458), octafluoropentyl-tetrafluoroethyl ether (F-EAE), 1,2-di(cyanoethoxy)ethane (DENE), diphenyl ether (DPE), and 18-crown ether-6.

In some examples, the concentration of the lithium salt in the electrolyte is selected from 0.5 mol/L to 10 mol/L.

In some examples, the concentration of the lithium salt in the electrolyte is selected from 0.5 mol/L to 8 mol/L.

In some examples, the concentration of the lithium salt in the electrolyte is selected from 0.5 mol/L to 5 mol/L.

In some examples, the concentration of the lithium salt in the electrolyte is selected from 5 mol/L to 10 mol/L.

In some examples, the concentration of the lithium salt in the electrolyte is selected from 0.5 mol/L to 3 mol/L.

In some examples, the concentration of the lithium salt in the electrolyte is selected from 0.5 mol/L to 2 mol/L.

In some examples, the concentration of the lithium salt in the electrolyte may be selected from any one of the following values or an interval formed by any two values (unit: mol/L): 0.5, 0.6, 0.7, 0.8, 0.9, 1, 1.5, 2, 2.5, 3, 3.5, 4, 4.5, 5, 6, 7, 8, 9, 9.5, 10, and the like.

The concentration of the lithium salt in the electrolyte will also affect the deposition morphology of lithium ions. The concentration of the lithium salt will change the solvation of Li⁺ in the electrolyte, which affects the composition of a solid electrolyte interface film (SEI film) and the deposition morphology of lithium ions. By controlling the lithium salt in the electrolyte at an appropriate concentration, dense and uniform deposition of lithium ions and smaller volume expansion can be achieved. In addition, by controlling the lithium salt in the electrolyte at an appropriate concentration, the polymer layer can also have appropriate mechanical properties, which can avoid excessive lithium salt concentration that is not conducive to mechanical properties, and can also achieve better lithium ion conductivity during charging and discharging to avoid poor lithium ion conductivity caused by insufficient lithium salt concentration.

In some examples, the mass ratio of the polymer Poly to the electrolyte is selected from 199:1 to 1:1. "199:1 to 1:1" and (199-1):1 represent the same meaning and can be used interchangeably.

In some examples, the mass ratio of the polymer Poly to the electrolyte is selected from 19:1 to 1:1.

In some examples, the mass ratio of the polymer Poly to the electrolyte is selected from 9.5:1 to 1:1.

In some examples, the mass ratio of the polymer Poly to the electrolyte is selected from 8:1 to 2:1.

In some examples, the mass ratio of the polymer Poly to the electrolyte is selected from 6:1 to 1:1.

In some examples, the mass ratio of the polymer Poly to the electrolyte may further be 49:1, 39:1, 19:1, 9.5:1, 9:1, 8.5:1, 8:1, 7.5:1, 7:1, 6.5:1, 6:1, 5.5:1, 5:1, 4.5:1, 4:1, 3.5:1, 3:1, 2.5:1, 2:1, 1.5:1, 1:1, or the like. The mass ratio may also be selected from an interval formed by any two ratios mentioned above, such as (9-2):1.

In some examples, the mass proportion of the electrolyte in the polymer layer is selected from 0.5% to 50%.

In some examples, the mass proportion of the electrolyte in the polymer layer is selected from 1% to 50%.

In some examples, the mass proportion of the electrolyte in the polymer layer is selected from 2% to 50%.

In some examples, the mass proportion of the electrolyte in the polymer layer is selected from 5% to 50%.

In some examples, the mass proportion of the electrolyte in the polymer layer is selected from 8% to 50%.

In some examples, the mass proportion of the electrolyte in the polymer layer is selected from 9% to 50%.

In some examples, the mass proportion of the electrolyte in the polymer layer is selected from 9.5% to 50%.

In some examples, the mass proportion of the electrolyte in the polymer layer is selected from 10% to 50%.

In some examples, the mass proportion of the electrolyte in the polymer layer is selected from 30% to 50%.

In some examples, the mass proportion of the electrolyte in the polymer layer may be selected from any one of the following percentages or an interval formed by any two percentages: 0.5%, 1%, 1.5%, 2%, 3%, 4%, 5%, 6%, 7%, 8%, 9%, 10%, 11%, 12%, 14%, 15%, 16%, 18%, 20%, 25%, 30%, 35%, 40%, 45%, 50%, and the like. Non-restrictive examples of the interval formed by any two percentages may be 9% to 55%, 9.5% to 50%, or the like.

The mass proportion of the electrolyte in the polymer layer can be adjusted by controlling the mass ratio of the polymer Poly to the electrolyte in an appropriate range. The mass fraction of the electrolyte in the polymer layer will affect the elasticity and ion conductivity of a protective layer. The presence of a certain content of lithium salt and solvent can plasticize the polymer layer to improve the elasticity of the polymer layer. In addition, during the in-situ polymerization process of the polymer layer, lithium salts and solvents are incorporated into the polymer layer. On the microscopic scale, the polymer layer has a sponge-like loose porous structure, and pores are filled with the electrolyte, thereby providing a pathway for the subsequent transmission of lithium ions.

In some examples, the thickness of the polymer layer is selected from 5 nm to 10 µm.

In some examples, the thickness of the polymer layer is selected from 50 nm to 8 µm.

In some examples, the thickness of the polymer layer is selected from 50 nm to 5 µm.

In some examples, the thickness of the polymer layer is selected from 100 nm to 5 µm.

In some examples, the thickness of the polymer layer may be selected from any one of the following thicknesses or an interval formed by any two thicknesses: 5 nm, 5.5 nm, 6 nm, 6.5 nm, 7 nm, 7.5 nm, 8 nm, 8.5 nm, 9 nm, 9.5 nm, 10 nm, 20 nm, 30 nm, 40 nm, 50 nm, 60 nm, 70 nm, 80 nm, 90 nm, 100 nm, 150 nm, 200 nm, 250 nm, 300 nm, 400 nm, 500 nm, 600 nm, 700 nm, 800 nm, 900 nm, 1 µm, 1.5 µm, 2 µm, 2.5 µm, 3 µm, 3.5 µm, 4 µm, 4.5 µm, 5 µm, 6 µm, 7 µm, 8 µm, 9 µm, 9.5 µm, 10 µm, and the like.

The structure of the polymer layer on the surface of the lithium-containing metal can be controlled at the nanometer scale, which is beneficial for an assembled battery cell to exhibit smaller interface impedance.

In some examples, the polymer layer has an elastic modulus of 0.1 MPa to 80 MPa.

In some examples, the polymer layer has an elastic modulus of 0.5 MPa to 50 MPa.

In some examples, the polymer layer has an elastic modulus of 1 MPa to 50 MPa.

In some examples, the polymer layer has an elastic modulus of 10 MPa to 50 MPa.

In some examples, the elastic modulus of the polymer layer may be selected from any one of the following values or an interval formed by any two values: 0.1 MPa, 0.2 MPa, 0.5 MPa, 0.8 MPa, 1 MPa, 2 MPa, 3 MPa, 4 MPa, 5 MPa, 6 MPa, 7 MPa, 8 MPa, 9 MPa, 10 MPa, 12 MPa, 14 MPa, 15 MPa, 16 MPa, 18 MPa, 20 MPa, 25 MPa, 30 MPa, 35 MPa, 40 MPa, 45 MPa, 50 MPa, 60 MPa, 65 MPa, 70 MPa, 75 MPa, 80 MPa, and the like.

In the present application, the involved "elastic modulus of the polymer layer" generally refers to a test value at 20°C to 30°C, unless otherwise specified.

In some examples, the elastic modulus of the polymer layer refers to an elastic modulus at 25°C.

In some examples, the polymer layer has an elastic deformation range of 20% to 500%.

In some examples, the polymer layer has an elastic deformation range of 20% to 300%.

In some examples, the polymer layer has an elastic deformation range of 20% to 200%.

In some examples, the polymer layer has an elastic deformation range of 100% to 300%.

In some examples, the polymer layer has an elastic deformation range of 100% to 200%.

In some examples, the polymer layer has an elastic deformation range of 100% to 190%.

In some examples, the elastic deformation range of the polymer layer may be selected from any one of the following percentages or an interval formed by any two percentages: 20%, 25%, 30%, 35%, 40%, 45%, 50%, 55%, 60%, 65%, 70%, 80%, 90%, 100%, 150%, 200%, 220%, 240%, 250%, 260%, 280%, 300%, 350%, 400%, 450%, 500%, and the like.

In the present application, the involved "elastic deformation range of the polymer layer" generally refers to a test value at 20°C to 30°C, unless otherwise specified.

In some examples, the elastic deformation range of the polymer layer refers to an elastic deformation range at 25°C.

In some examples, based on the electrolyte, the swelling rate of the polymer layer at 25°C is selected from 5% to 50%.

In some examples, the swelling rate of the polymer layer is selected from 10% to 50%.

In some examples, the swelling rate of the polymer layer is selected from 10% to 45%.

In some examples, the swelling rate of the polymer layer is selected from 20% to 45%.

In some examples, based on the electrolyte, the swelling rate of the polymer layer may be selected from any one of the following percentages or an interval formed by any two percentages: 5%, 6%, 7%, 8%, 9%, 10%, 11%, 12%, 14%, 15%, 16%, 18%, 20%, 25%, 30%, 35%, 40%, 45%, 50%, and the like.

In the present application, the involved "swelling rate of the polymer layer" generally refers to a test value at 20°C to 30°C, unless otherwise specified.

In some examples, the swelling rate of the polymer layer refers to a swelling rate at 25°C. See test method of "structure and performance test" in the examples below.

In some examples, based on the electrolyte, the ion conductivity of the swollen polymer layer is selected from 5×10⁻³ S/cm to 1×10⁻⁶ S/cm.

In some examples, the ion conductivity of the swollen polymer layer is selected from 5×10⁻³ S/cm to 1×10⁻⁵ S/cm.

In some examples, the ion conductivity of the swollen polymer layer is selected from 5×10⁻³ S/cm to 1×10⁻⁴ S/cm.

In some examples, the ion conductivity of the swollen polymer layer is selected from 3×10⁻³ S/cm to 1×10⁻⁴ S/cm.

In some examples, the ion conductivity of the swollen polymer layer is selected from 3×10⁻³ S/cm to 5×10⁻⁴ S/cm.

In some examples, based on the electrolyte, the ion conductivity of the swollen polymer layer may be selected from any one of the following values or an interval formed by any two values: 5×10⁻³ S/cm, 4.5×10⁻³ S/cm, 4×10⁻³ S/cm, 3.5×10⁻³ S/cm, 3×10⁻³ S/cm, 2.5×10⁻³ S/cm, 2×10⁻³ S/cm, 1.5×10⁻³ S/cm, 1×10⁻³ S/cm, 9×10⁻⁴ S/cm, 8×10⁻⁴ S/cm, 7×10⁻⁴ S/cm, 6×10⁻⁴ S/cm, 5×10⁻⁴ S/cm, 4×10⁻⁴ S/cm, 3×10⁻⁴ S/cm, 2×10⁻⁴ S/cm, 1×10⁻⁴ S/cm, 9×10⁻⁵ S/cm, 8×10⁻⁵ S/cm, 7×10⁻⁵ S/cm, 6×10⁻⁵ S/cm, 5×10⁻⁵ S/cm, 4×10⁻⁵ S/cm, 3×10⁻⁵ S/cm, 2×10⁻⁵ S/cm, 1×10⁻⁵ S/cm, and the like.

In the present application, the involved "ion conductivity of the swollen polymer layer" generally refers to a test value at 20°C to 30°C, unless otherwise specified.

In some examples, the ion conductivity of the swollen polymer layer refers to the ion conductivity at 25°C.

In some examples, the volume expansion rate of the negative electrode plate is selected from 7% to 96%. The volume expansion rate of the negative electrode plate may also be selected from any one of the following percentages or an interval formed by any two percentages: 7%, 8%, 9%, 10%, 11%, 12%, 14%, 15%, 16%, 18%, 20%, 25%, 30%, 35%, 40%, 45%, 50%, 55%, 60%, 65%, 70%, 75%, 80%, 85%, 90%, 95%, and the like.

In the present application, the involved "volume expansion rate of the electrode plate" generally refers to a test value at 20°C to 30°C, unless otherwise specified.

In some examples, the volume expansion rate of the electrode plate refers to a volume expansion rate at 25°C.

In some examples, the negative electrode plate substrate further includes a negative electrode current collector. The negative electrode current collector is located on the side of the lithium-containing layer away from the polymer layer.

In some examples, a second negative electrode active material layer is disposed or not disposed between the negative electrode current collector and the lithium-containing layer, and furthermore, the components in the second negative electrode active material layer and the lithium-containing layer may be the same or different.

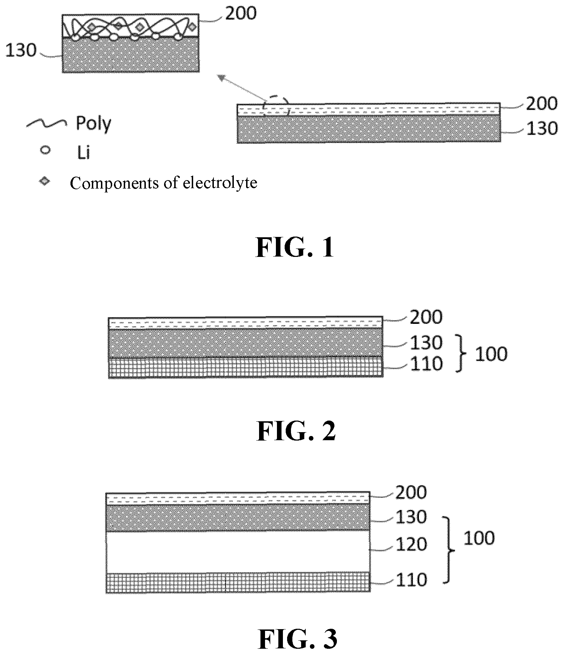

In some examples, a lithium-containing layer is only disposed at the outermost layer on one side of the negative electrode plate substrate (as shown in Fig.1, Fig. 2 and Fig. 3).

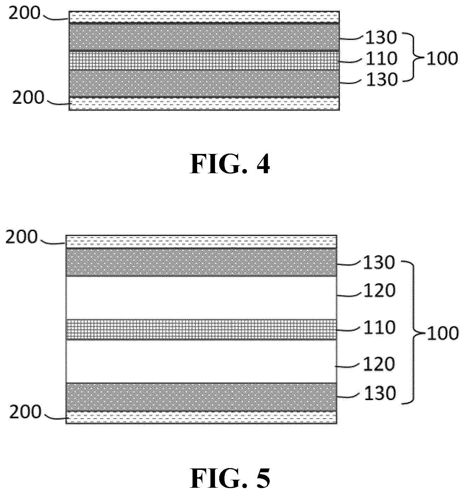

In some examples, lithium-containing layers are disposed at the outermost layers on both sides of the negative electrode plate substrate (as shown in Fig. 4 and Fig. 5). The lithium-containing layers on both sides may contain the same content or different contents of lithium. The content of lithium in the lithium-containing layer may refer to the above-mentioned definition. The content of lithium in the second negative electrode active material may be selected from the content of lithium in the negative electrode active material layer of an ordinary lithium metal battery. Non-restrictive examples of the second negative electrode active material layer may be a lithium metal, a lithium alloy, or a composition of a lithium metal and a lithium alloy.

In the present application, the "second negative electrode active material layer" may select any appropriate negative electrode active material layer from the reported active material layers of lithium metal batteries. The second negative electrode active material layer may be essentially composed of a lithium (Li) metal, may be a lithium alloy, or may be a combination essentially composed of a lithium metal and a lithium alloy.

In some examples, lithium-containing layers are disposed at the outermost layers on both sides of the negative electrode plate substrate, and polymer layers are disposed on the surfaces of the lithium-containing layers on both sides (as shown in Fig. 4 and Fig. 5); and the chemical compositions and contents of the polymer layers on both sides may be the same or different.

In some examples, the negative electrode plate has a structure shown in Fig. 1, including a lithium-containing layer 130 and a polymer layer 200 which are stacked. The lithium-containing layer contains lithium, a lithium alloy or a combination of lithium and a lithium alloy. The lithium-containing layer here serves as a negative electrode active material layer. The polymer layer contains a polymer Poly, and the polymer Poly carries a large number of cyano groups. The cyano groups covalently bind with lithium in the lithium-containing layer to form stable chemical connections to firmly connect the polymer layer to the surface of the lithium-containing layer. The polymer Poly may be selected from the polymer Poly described in any embodiment of the first aspect. The definition of the electrolyte is mentioned above.

In some examples, the negative electrode plate has a structure shown in Fig. 2, including a negative electrode plate substrate 100 and a polymer layer 200 which are stacked. The negative electrode plate substrate 100 includes a negative electrode current collector 110 and a lithium-containing layer 130 which are sequentially stacked. The polymer layer 200 is located on the surface of the lithium-containing layer 130 away from the negative electrode current collector 110. Further, the polymer layer includes a polymer Poly and an electrolyte. The lithium-containing layer contains lithium, a lithium alloy or a combination of lithium and a lithium alloy. The polymer layer contains a polymer Poly, and the polymer Poly carries a large number of cyano groups. The cyano groups covalently bind with lithium in the lithium-containing layer to form stable chemical connections to firmly connect the polymer layer to the surface of the negative electrode plate substrate.

In some examples, the negative electrode plate has a structure shown in Fig. 3, including a negative electrode plate substrate 100 and a polymer layer 200 which are stacked. The negative electrode plate substrate 100 includes a negative electrode current collector 110, a second negative electrode active material layer 120 and a lithium-containing layer 130 which are sequentially stacked. The polymer layer is located on the surface of the lithium-containing layer 130 away from the negative electrode current collector 110.

In some examples, the negative electrode plate has a structure shown in Fig. 4, including a negative electrode plate substrate 100 and two polymer layers 200 respectively disposed on the surfaces of both sides of the negative electrode plate substrate 110. The negative electrode plate substrate includes a negative electrode current collector 110 and two lithium-containing layers 130 respectively disposed on the surfaces of both sides of the negative electrode current collector 110. The lithium-containing layers 130 on both sides of the negative electrode plate are directly connected (chemically connected through covalent interaction) to the corresponding polymer layers 200 respectively. The chemical compositions and contents of the polymer layers 130 on both sides may be the same or different. The chemical compositions and contents of the lithium-containing layers 130 on both sides may be the same or different.

In some examples, the negative electrode plate has a structure shown in Fig. 5, including a negative electrode plate substrate 100 and two polymer layers 200 respectively disposed on the surfaces of both sides of the negative electrode plate substrate 100. The negative electrode plate substrate includes a negative electrode current collector 110, two second negative electrode active material layers 120 respectively disposed on the surfaces of both sides of the negative electrode current collector 110, and two lithium-containing layers 130 respectively disposed on the surfaces of the sides of the two second negative electrode active material layers 120 away from the negative electrode current collector 110. The lithium-containing layers 130 on both sides of the negative electrode plate are directly connected (chemically connected through covalent interaction) to the corresponding polymer layers 200 respectively. The chemical compositions and contents of the polymer layers 200 on both sides may be the same or different. The chemical compositions and contents of the second negative electrode active material layers 120 on both sides may be the same or different. The chemical compositions and contents of the lithium-containing layers 130 on both sides may be the same or different.

### Negative electrode plate

In some examples, the negative electrode plate generally includes a negative electrode current collector and a negative electrode film layer disposed on at least one surface of the negative electrode current collector. The negative electrode film layer includes the above-mentioned lithium-containing layer, and also includes a polymer layer formed on the surface of at least one side of the lithium-containing layer away from the inside of the negative electrode film layer. That is, the polymer layer is located on the surface of the side of the lithium-containing layer away from the negative electrode current collector, and the polymer layer is located at the outermost layer of the negative electrode plate. Further, the polymer layer is chemically connected to the lithium-containing layer through covalent interaction.

As an example, the negative electrode current collector has two opposite surfaces in its own thickness direction, and the negative electrode film layer is disposed on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector may be formed by forming a metal material (such as copper, copper alloy, nickel, nickel alloy, titanium, titanium alloy, silver, and silver alloy) on a high molecular material substrate (such as polypropylene (PP), polyethylene terephthalate (PET), polybutylene terephthalate (PBT), polystyrene (PS), and polyethylene (PE)).

In some embodiments, negative electrode active materials in the negative electrode active material layer may be negative electrode active materials known in the art for lithium metal batteries. As an example, the negative electrode active material applicable to the present application may include one or more of lithium metals and lithium alloys. The lithium alloy contains lithium, and may also contain one or more of silver, magnesium, aluminum, gold, zinc, tin, copper, nickel and titanium. The lithium-containing layer in the present application may serve as the first negative electrode active material layer, and a second negative electrode active material layer may also be disposed between the lithium-containing layer and the negative electrode current collector. The composition and content of the second negative electrode active material layer may be the same with or different from the composition and content of the lithium containing layer.

In some embodiments, the negative electrode film layer may further optionally include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some examples, the negative electrode film layer may further optionally include a conductive agent. The conductive agent may be selected from at least one of superconducting carbon, acetylene black, carbon black, Ketjen black, carbon dot, carbon nanotube, graphene, and carbon nanofiber.

In some examples, the negative electrode film layer may further optionally include other auxiliaries, for example, a thickener (such as sodium carboxymethyl cellulose (CMC-Na)), and the like.

A **third** aspect of the present application provides an electrode assembly, including a positive electrode plate, a separator and the negative electrode plate according to the second aspect of the present application, which are stacked, wherein the separator is disposed between the negative electrode plate and the positive electrode plate; and the polymer layer is at least disposed on the surface of the negative electrode plate substrate on the side close to the separator.

A dense and uniform polymer layer is formed on the surface of the lithium-containing layer on the surface of at least one side of the negative electrode plate in the electrode assembly, which can play a role of a protective layer at the negative electrode of a lithium metal battery, effectively inhibit the contact reaction between the electrolyte and lithium, reduce the consumption of the electrolyte and lithium, improve the coulombic efficiency, and prolong the cycle life.

In some examples, a lithium-containing layer is disposed at the outermost layer on one side of the negative electrode plate substrate.

In some examples, lithium-containing layers are disposed at the outermost layers on both sides of the negative electrode plate substrate. The lithium-containing layers on both sides may contain the same content or different contents of lithium.

In some examples, lithium-containing layers are disposed at the outermost layers on both sides of the negative electrode plate substrate, and polymer layers are disposed on the surfaces of the lithium-containing layers on both sides; and the chemical compositions and contents of the polymer layers on both sides may be the same or different.

**A fourth aspect** of the present application provides a secondary battery, including a battery cell electrolyte and the electrode assembly according to the third aspect of the present application. The battery cell electrolyte is disposed between the polymer layer and the positive electrode plate.

A dense and uniform polymer layer is formed on the surface of the lithium-containing layer on the surface of at least one side of the negative electrode plate in the secondary battery, which can play a role of a protective layer at the negative electrode of a lithium metal battery, effectively inhibit the contact reaction between the electrolyte and lithium, reduce the consumption of the electrolyte and lithium, improve the coulombic efficiency, and prolong the cycle life.

Generally, the secondary battery includes a positive electrode plate, a negative electrode plate, a battery cell electrolyte, and a separator. During charging and discharging, active ions are intercalated and deintercalated back and forth between the positive electrode plate and the negative electrode plate. The battery cell electrolyte plays a role in conducting ions between the positive electrode plate and the negative electrode plate. The separator is disposed between the positive electrode plate and the negative electrode plate, and mainly functions to prevent a short circuit between the positive electrode and the negative electrode while allowing ions to pass through.

### Positive electrode plate

The positive electrode plate includes a positive electrode current collector and a positive electrode film layer disposed on at least one surface of the positive electrode current collector, and the positive electrode film layer includes the positive electrode active material according to the first aspect of the present application.

As an example, the positive electrode current collector has two opposite surfaces in its own thickness direction, and the positive electrode film layer is arranged on either or both of the two opposite surfaces of the positive electrode current collector.

In some examples, the positive electrode current collector may be a metal foil or a composite current collector. For example, an aluminum foil can be used as the metal foil. The composite current collector may include a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. It is possible to use only one of these positive electrode active materials alone, or to use more than two positive electrode active materials in combination. Here, examples of the lithium transition metal oxide may include, but are not limited to, at least one of lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with an olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotubes, graphene, and carbon nanofibers.

In some examples, the positive electrode plate may be prepared by dispersing the components for preparing the positive electrode plate, for example, the positive electrode active material, the conductive agent, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode plate.

### Battery cell electrolyte

The battery cell electrolyte plays a role in conducting ions between the positive electrode plate and the negative electrode plate. The type of the battery cell electrolyte is not particularly limited in the present application, and may be selected according to requirements. For example, the battery cell electrolyte may be in a liquid, gel, or full solid state.

In some examples, a second electrolyte is used as the battery cell electrolyte. The second electrolyte includes electrolyte salts and solvents. The compositions of the second electrolyte and the electrolyte in the polymer layer may be the same or different.

In some examples, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some examples, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some examples, the battery cell electrolyte may further optionally include additives. For example, the additives may include a negative electrode film-forming additive and a positive electrode film-forming additive, and may also include additives that can improve certain battery performance, such as additives that improve battery overcharge performance, and additives that improve battery high or low temperature performance.

### Separator

In some examples, the secondary battery also includes a separator. The type of the separator is not particularly limited in the present application, and any well-known separator with a porous structure having good chemical stability and mechanical stability may be selected.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some examples, the positive electrode plate, the negative electrode plate and the separator may be made into an electrode assembly by a winding process or a lamination process.

In some examples, the secondary battery may include an outer package. The outer package may be used for encapsulating the above-mentioned electrode assembly and battery cell electrolyte.

In some examples, the outer package of the secondary battery may be a hard shell, such as a hard plastic shell, an aluminum shell, or a steel shell. The outer package of the secondary battery may also be a soft package, such as a bag-type soft package. The material of the soft package may be plastic, and as plastic, polypropylene, polybutylene terephthalate and polybutylene succinate may be enumerated.

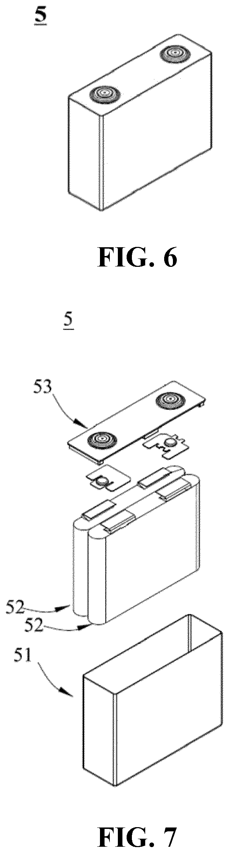

The shape of the secondary battery is not particularly limited in the present application, which may be a cylindrical shape, a square shape or any other shapes. For example, Fig. 6 is an example of secondary battery 5 having a square structure.

In some embodiments, referring to Fig. 7, the outer package can include a case 51 and a cover plate 53. Here, the case 51 can include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode plate, the negative electrode plate and the separator may be formed into an electrode assembly 52 by a winding process or a lamination process. The electrode assembly 52 is encapsulated in the accommodating cavity. The electrolyte solution impregnates the electrode assembly 52. One or more electrode assemblies 52 in the secondary battery 5 may be provided, which may be selected by those skilled in the art according to specific actual requirements.

In some examples, the components of the battery cell electrolyte and the electrolyte in the polymer layer may be the same or different.

When the components of the battery cell electrolyte in the secondary battery are the same as those of the electrolyte in the polymer layer, the consistency of lithium ion transmission in the battery cell can be maintained, and the interference of multiple factors such as electrolyte solvation and interface side reactions can be reduced.

When the components of the battery cell electrolyte in the secondary battery are different from those of the electrolyte in the polymer layer, the formation of stable SEI can be induced directionally on the side of the lithium-containing layer, thereby regulating the deposition morphology of lithium ions.

In some examples, the charging current density of the secondary battery is selected from 0.3 mA/cm² to 12 mA/cm².

In some examples, the charging current density of the secondary battery is selected from 1 mA/cm² to 10 mA/cm².

In some examples, the charging current density of the secondary battery is selected from 1 mA/cm² to 6 mA/cm².

In some examples, the charging current density of the secondary battery may be selected from any one of the following values or an interval formed by any two values: 0.3 mA/cm², 0.4 mA/cm², 0.5 mA/cm², 0.6 mA/cm², 0.7 mA/cm², .8 mA/cm², 0.9 mA/cm², 1 mA/cm², 1.5 mA/cm², 2 mA/cm², 2.5 mA/cm², 3 mA/cm², 3.5 mA/cm², 4 mA/cm², 4.5 mA/cm², 5 mA/cm², 5.5 mA/cm², 6 mA/cm², 7 mA/cm², 8 mA/cm², 9 mA/cm², 10 mA/cm², 11 mA/cm², 12 mA/cm², and the like.

In some examples, the applicable charging current density may also be 0.3 mA/cm² to 0.5 mA/cm², 0.5 mA/cm² to 1 mA/cm², 1 mA/cm² to 1.5 mA/cm², 1.5 mA/cm² to 2 mA/cm², 2 mA/cm² to 2.5 mA/cm², 2.5 mA/cm² to 3 mA/cm², 3 mA/cm² to 3.5 mA/cm², 3.5 mA/cm² to 4 mA/cm², 4 mA/cm² to 4.5 mA/cm², 4.5 mA/cm² to 5 mA/cm², 5 mA/cm² to 5.5 mA/cm², 5.5 mA/cm² to 6 mA/cm², 6 mA/cm² to 8 mA/cm², 8 mA/cm² to 10 mA/cm² or 10 mA/cm² to 12mA/cm².

In some examples, the capacity retention rate of the secondary battery after 50 cycles is selected from 80% to 97%. The capacity after 50 cycles may also be selected from any one of the following percentages or an interval formed by any two percentages: 80%, 81%, 82%, 83%, 84%, 85%, 86%, 88%, 90%, 92%, 94%, 95%, 96%, and the like.

In the present application, the involved "capacity retention rate of the secondary battery after 50 cycles" generally refers to a test value at 20°C to 30°C, unless otherwise specified.

In some examples, the capacity retention rate of the secondary battery after 50 cycles refers to a volume expansion rate at 25°C.

**A fifth aspect** of the present application provides a battery module, including the secondary battery according to the fourth aspect of the present application.

In some examples, secondary batteries may be assembled into a battery module, one or more secondary batteries in the battery module may be provided, and the specific number of secondary batteries may be selected by those skilled in the art according to the application and capacity of the battery module.

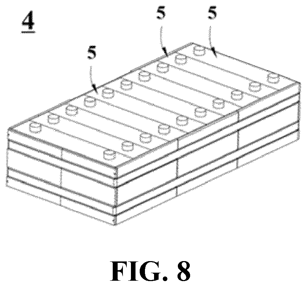

Fig. 8 is an example of a battery module 4. Referring to Fig. 8, in the battery module 4, a plurality of secondary batteries 5 may be sequentially arranged along the length direction of the battery module 4. Of course, any other arrangement is also possible. The plurality of secondary batteries 5 may further be fixed by fasteners.

Optionally, the battery module 4 may further include a case having an accommodating space in which a plurality of secondary batteries 5 are accommodated.

In some examples, the above-mentioned battery modules may further be assembled into a battery pack, one or more battery modules in the battery pack may be provided, and the specific number of battery modules may be selected by those skilled in the art according to the application and capacity of the battery pack.

**A sixth aspect** of the present application provides a battery pack, including the battery module according to the fifth aspect of the present application.

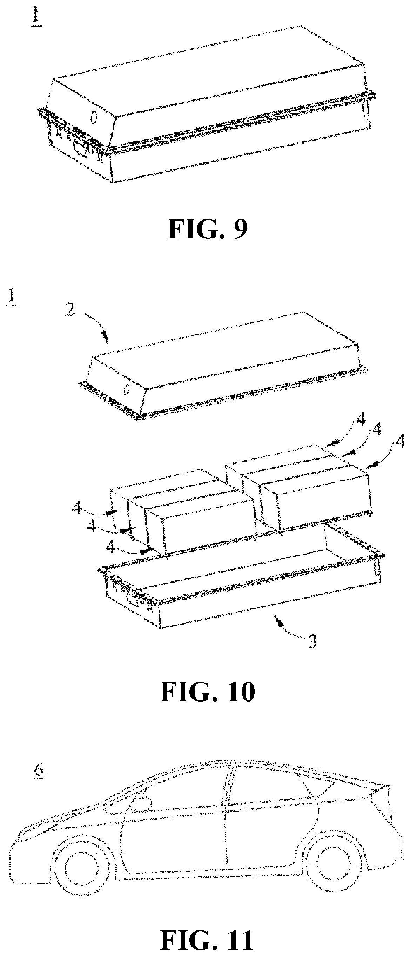

Fig. 9 and Fig. 10 are an example of a battery pack 1. Referring to Fig. 9 and Fig. 10, the battery pack 1 may comprise a battery box and a plurality of battery modules 4 arranged in the battery box. The battery box includes an upper box 2 and a lower box 3, where the upper box 2 can cover the lower box 3 and forms an enclosed space for accommodating the battery module 4. The plurality of battery modules 4 may be arranged in the battery box in any manner.

**A seventh aspect** of the present application provides an electrical apparatus, including one or more of the secondary battery according to the fourth aspect of the present application, the battery module according to the fifth aspect of the present application, and the battery pack according to the sixth aspect of the present application.

The electrical apparatus includes at least one of the secondary battery, the battery module and the battery pack provided in the present application. The secondary battery, the battery module or the battery pack may be used as a power source for the electrical apparatus, and may also be used as an energy storage unit for the electrical apparatus. The electrical apparatus may include mobile devices, electric vehicles, electric trains, ships and satellites, energy storage systems, and the like, but is not limited to this. The mobile device may be a mobile phone, a laptop, or the like. The electric vehicle may be an all-electric vehicle, a hybrid electric vehicle, a plug-in hybrid electric vehicle, an electric bicycle, an electric scooter, an electric golf cart, an electric truck, or the like, but is not limited to this.

For the electrical apparatus, the secondary battery, the battery module or the battery pack may be selected according to the requirements during use.

Fig. 11 is an example of an electrical apparatus 6. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

**An eighth aspect** of the present application provides an application of a monomer compound II in preparation of a negative electrode plate, wherein the structure of the monomer compound II is shown in Formula II: 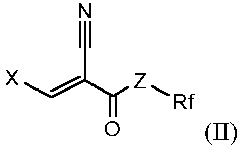 wherein Rf, Z and X are each independently defined in the first aspect of the present application.

Non-restrictive examples of the monomer compound II are shown in Table 1.

In some examples, the monomer compound II contacts lithium in the lithium-containing layer of the negative electrode plate substrate so as to form a polymer layer through in-situ polymerization.

The monomer compound II is a cyanoacrylic derivative compound, wherein cyano can be in contact with lithium in the outermost layer of the negative electrode plate substrate to form a chemical connection, and carbon-carbon double bonds can undergo the in-situ polymerization reaction under lithium catalysis, so as to prepare the lithium coating composition according to the first aspect of the present application. At this time, a firmly connected, dense and uniform polymer layer is formed on the surface of the lithium-containing layer, which can play a role of the above-mentioned protective layer.

**A ninth aspect** of the present application provides a preparation method of a negative electrode plate, including the following steps:
providing a negative electrode plate substrate, the outermost layer on at least one side of the negative electrode plate substrate being a lithium-containing layer, and the lithium-containing layer including a lithium-containing metal; further providing a reaction mixture containing a monomer compound II and an electrolyte; and
coating the reaction mixture on the surface of the lithium-containing layer on at least one side of the negative electrode plate substrate, and polymerizing the monomer compound II in situ to form a polymer layer; 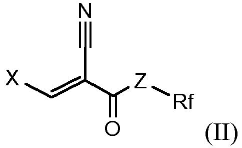
wherein Rf, Z and X are each independently defined in the first aspect of the present application; and
the electrolyte is defined in the second aspect of the present application.

The definition of the negative electrode plate substrate provided in this aspect can refer to the above-mentioned definition. The negative electrode plate substrate provided in this aspect at least includes a lithium-containing layer that can contact with the monomer compound II, so as to catalyze the in-situ polymerization reaction.

In the presence of an electrolyte, cyano in the monomer compound II can be in contact with lithium in the outermost layer of the negative electrode plate substrate to form a chemical connection (covalent connection), and carbon-carbon double bonds can undergo the in-situ polymerization reaction under lithium catalysis, so as to form the polymer Poly shown in Formula I to prepare the lithium coating composition according to the first aspect of the present application. At this time, a firmly connected, dense and uniform polymer layer is formed on the surface of the lithium-containing layer, which can play a role of the above-mentioned protective layer. Compared with the physical coating action in the traditional technology, the polymer layer not only stably binds to the surface of the lithium-containing layer through chemical connections to avoid falling off from the surface of the lithium-containing layer during charging and discharging, but also has a dense and uniform coating, and the thickness of the coating can be controlled at the nanometer scale. The assembled battery cell can exhibit smaller interface impedance.

In some examples, the negative electrode plate substrate may be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate substrate.

In some examples, the monomer compound II provided in the present application contacts with at least a catalyst dosage of lithium in the lithium-containing metal. On the one hand, chemical connection sites for the polymer layer are provided. On the other hand, the in-situ polymerization reaction of cyanoacrylic derivative monomers is effectively catalyzed.

In some examples, the mass ratio of the polymer Poly to the electrolyte is selected from 199:1 to 1:1.

In some examples, the mass ratio of the polymer Poly to the electrolyte is selected from 49:1 to 1:1.

In some examples, the mass ratio of the polymer Poly to the electrolyte is selected from 19:1 to 1:1.

In some examples, the mass ratio of the monomer compound II to the electrolyte is selected from 9.5:1 to 1:1.

In some examples, the mass ratio of the monomer compound II to the electrolyte is selected from 8:1 to 2:1.

In some examples, the mass ratio of the monomer compound II to the electrolyte is selected from 6:1 to 1:1.

In some examples, the mass ratio of the polymer Poly to the electrolyte may also be selected from any one of the following ratios or an interval formed by any two ratios: 49:1, 19:1, 9.5:1, 9:1, 8:1, 7:1, 6:1, and the like.

By controlling the mass ratio of the monomer compound II to the electrolyte, it is possible to control the mass ratio of the polymer Poly in the generated polymer layer to the electrolyte.

In some examples, in the step of coating the reaction mixture on the surface of the lithium-containing layer on at least one side of the negative electrode plate substrate, the coating mode is selected from any one of a coating method, a spray coating method, a spin coating method, and a vapor deposition method.

In some examples, the reaction temperature of the in-situ polymerization is selected from 30°C to 100°C.

In some examples, the reaction temperature of the in-situ polymerization is selected from 30°C to 50°C.

In some examples, the reaction temperature of the in-situ polymerization is selected from 40°C to 60°C.

In some examples, the reaction temperature of the in-situ polymerization may be selected from any one of the following values or an interval formed by any two values: 30°C, 35°C, 40°C, 45°C, 50°C, 55°C, 60°C, 65°C, 70°C, 75°C, 80°C, 85°C, 90°C, 95°C, 100°C, and the like.

In some examples, the reaction time of the in-situ polymerization is selected from 0.1 h to 24 h.

In some examples, the reaction time of the in-situ polymerization is selected from 0.1 h to 12 h.

In some examples, the reaction time of the in-situ polymerization is selected from 0.1 h to 2 h.

In some examples, the reaction time of the in-situ polymerization may be selected from any one of the following durations or an interval formed by any two durations: 0.1 h, 0.2 h, 0.3 h, 0.4 h, 0.5 h, 0.6 h, 0.8 h, 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 11 h, 12 h, 14 h, 15 h, 16 h, 18 h, 20 h, 21 h, 22 h, 24 h, and the like.

In some examples, in the step of coating the reaction mixture on the surface of the lithium-containing layer on at least one side of the negative electrode plate substrate, the coating thickness of the reaction mixture is selected from 100 nm to 8 µm.

In some examples, the coating thickness of the reaction mixture is selected from 50 nm to 5 µm.

In some examples, the coating thickness of the reaction mixture is selected from 50 nm to 8 µm.

In some examples, the coating thickness of the reaction mixture may be selected from any one of the following values or an interval formed by any two values: 50 nm, 100 nm, 200 nm, 300 nm, 400 nm, 500 nm, 600 nm, 700 nm, 800 nm, 900 nm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, and the like.

In some examples, the formed polymer layer is defined in the second aspect of the present application.

In some examples, the negative electrode plate substrate is a pure lithium plate. At this time, a negative electrode current collector may also be additionally introduced into the negative electrode plate of the battery to facilitate the assembly of tabs, or a pure lithium plate covered with a polymer layer may be used as the negative electrode plate.

In some examples, the negative electrode plate substrate further includes a negative electrode current collector. The negative electrode current collector is located on the side of the lithium-containing layer away from the polymer layer.

In some examples, a second negative electrode active material layer is disposed or not disposed between the negative electrode current collector and the lithium-containing layer, and the components in the second negative electrode active material layer and the lithium-containing layer may be the same or different.

In some examples, a method of forming a second active material layer or lithium-containing layer on a negative electrode current collector may be selected from: (1) a method of transferring a lithium metal or lithium alloy calendered by rolling onto a negative electrode current collector; and (2) a method of evaporating a lithium metal or lithium alloy on a negative electrode current collector.

In some examples, a method of forming a lithium-containing layer on a second active material layer may be selected from: (1) a method of transferring a lithium metal or lithium alloy calendered by rolling onto a second active material layer; and (2) a method of evaporating a lithium metal or lithium alloy on a second active material layer.

**A tenth aspect** of the present application provides a preparation method of a secondary battery, wherein the secondary battery is the secondary battery according to the fourth aspect of the present application. The preparation method includes the following step: the battery cell electrolyte is injected into a battery case containing the electrode assembly according to the third aspect of the present application.

Some examples of the present application will be described below.

The examples described below are exemplary and are only intended to explain the present application, but are not construed as limiting the present application. If specific techniques or conditions are not specified in examples, the above-mentioned descriptions are followed, or the techniques or conditions described in the literatures of the art or the product specifications are followed. All reagents or instruments used without indication of manufacturers are commercially available conventional products, or may be synthesized through commercially available products in a conventional mode.

In the following examples, the room temperature refers to 20°C to 30°C.

In the following examples, the coating mode for a monomer-electrolyte mixture is a coating method.

### Preparation of fluoromonomer (corresponding monomer compound II)

The fluoromonomers used in the following examples may be obtained through commercial procurement (such as 2,2,3,3,4,4,5,5-octafluoropentane-2-cyanoacrylate), or may also be prepared by the following methods.
1. When X in the monomer compound II is H, it can be prepared by the condensation reaction between a compound C1 (2-cyanoacrylate) and a compound C2, and the reaction generates a linking group Z, wherein when Z is O, an ester bond (C(=O)-O) is generated through the condensation reaction between carboxyl and hydroxyl; and when Z is NH, an amide bond (C(=O)-NH) is generated through the condensation reaction between carboxyl and -NH₂. 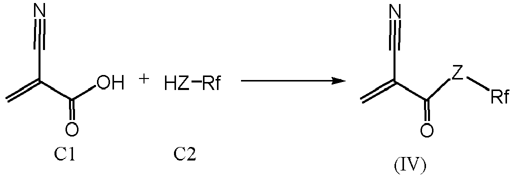
2. When X in the monomer compound II is not H, taking X as -N(CH₃)₂ as an example, the method in the literature "Bredereck, Hellmut, et al. Chemische Berichte, 1964, 97(12), 3397-3406" may be referenced. An acetal compound C3 and a 2-cyanoacrylate compound C4 are used for preparing an acrylate compound C5 containing 1-X and 2-cyano, the compound C5 is hydrolyzed to form a compound C6, and then, the compound C6 and the compound C2 undergo a condensation reaction to generate the fluoromonomer shown in Formula II.

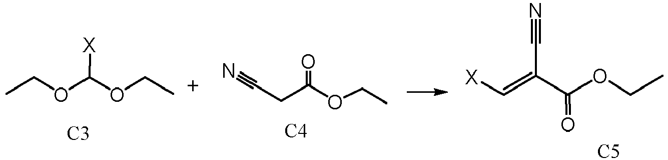

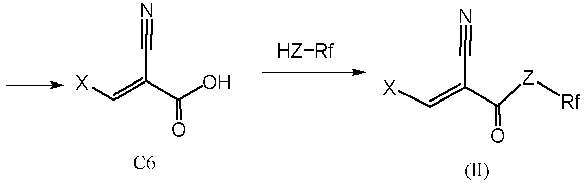

Whether the product compound is formed may be determined according to at least one of the molecular weight test result and the viscosity test result.

### Example 1 Preparation of lithium metal negative electrode containing polymer layer

(1) At 25°C, 10 g of 2,2,3,3,4,4,5,5-octafluoropentane-2- cyanoacrylate (fluoromonomer), 0.8 g of lithium bis(fluorosulfonyl)imide (LiFSI) and 5 g of dimethoxyethane (DME) were stirred evenly at a room temperature to obtain a monomer-electrolyte mixture, as shown in Table 1.
(2) The obtained monomer-electrolyte mixture was coated on the surface of a lithium plate for standing and reacting for 2 h at 30°C to obtain a lithium plate containing a transparent and dense polymer layer. Operating parameters can be seen in Table 2. The lithium plate was cut into a circular plate with a diameter of Φ16 mm as a negative electrode plate.

### (3) Preparation of positive electrode plate:

A positive electrode active material LiCoO₂, a conductive agent acetylene black and a binder polyvinylidene fluoride (PVDF) were mixed in a mass ratio of 96:2:2, and a solvent N-methylpyrrolidone (NMP) was added and stirred until the system is homogeneous to obtain a positive electrode slurry; and the positive electrode slurry was evenly coated on a positive electrode current collector aluminum foil, the aluminum foil was dried at a room temperature and then transferred to an oven to continue drying, and then, the product was cut into a circular plate with a diameter of Φ14 mm as a positive electrode plate with a positive surface capacity of 3 mAh/cm².

### (4) Preparation of electrolyte:

The lithium bis(fluorosulfonyl)imide (LiFSI) was slowly added to dimethoxyethane (DME) to prepare an electrolyte with a concentration of LiFSI of 1 mol/L.

(5) Separator: A polypropylene film was used.

### (6) Preparation of battery:

The above-mentioned positive electrode plate, separator and negative electrode plate were placed in sequence, the separator was located between the positive electrode plate and the negative electrode plate to play a role of isolation, and the electrolyte prepared in (4) was injected to assemble a button battery.

Before battery testing, the lithium metal battery was charged at a constant current of 3.0 mA/cm² to 4.25 V, and then discharged at a constant current of 3.0 mA/cm² to 3.0V.

Example 2 to Example 14 use the method basically the same as that in Example 1, and the difference lies in different steps (1).

In Example 2 to Example 14, the fluoromonomer, the fluorine substitution rate in Rf in the monomer, the mass content of the electrolyte in the monomer-electrolyte mixture, the concentration of the lithium salt in the electrolyte in step (1), the coating thickness, and the temperature and time of the in-situ polymerization reaction can be seen in Table 1 and Table 2.

Steps (1) of Example 2 to Example 14 are respectively as follows.

### Example 2 to Example 8

Step (1): At 25°C, 10 g of a fluoromonomer, 0.8 g of a lithium salt and 5 g of an electrolyte solvent were mixed evenly and stirred evenly at a room temperature to obtain a monomer-electrolyte mixture, as shown in Table 1 for fluoromonomers.

### Example 9

Step (1): At 25°C, 18 g of a fluoromonomer, 0.012 g of a lithium salt and 0.078 g of an electrolyte solvent were mixed evenly and stirred evenly at a room temperature to obtain a monomer-electrolyte mixture, as shown in Table 1 for fluoromonomers.

### Example 10

Step (1): At 25°C, 9 g of a fluoromonomer, 1.241 g of a lithium salt and 7.759 g of an electrolyte solvent were mixed evenly and stirred evenly at a room temperature to obtain a monomer-electrolyte mixture, as shown in Table 1 for fluoromonomers.

### Example 11

Step (1): At 25°C, 10 g of a fluoromonomer, 0.565 g of a lithium salt and 5.235 g of an electrolyte solvent were mixed evenly and stirred evenly at a room temperature to obtain a monomer-electrolyte mixture, as shown in Table 1 for fluoromonomers.

### Example 12

Step (1): At 25°C, 10 g of a fluoromonomer, 3.964 g of a lithium salt and 1.836 g of an electrolyte solvent were mixed evenly and stirred evenly at a room temperature to obtain a monomer-electrolyte mixture, as shown in Table 1 for fluoromonomers.

### Example 13

Step (1): At 25°C, 10 g of a fluoromonomer, 0.8 g of a lithium salt and 5 g of an electrolyte solvent were mixed evenly and stirred evenly at a room temperature to obtain a monomer-electrolyte mixture, as shown in Table 1 for fluoromonomers.

### Example 14

Step (1): At 25°C, 10 g of a fluoromonomer, 0.8 g of a lithium salt and 5 g of an electrolyte solvent were mixed evenly and stirred evenly at a room temperature to obtain a monomer-electrolyte mixture, as shown in Table 1 for fluoromonomers.

Comparative Example 1 and Comparative Example 2 respectively use the method basically the same as that in Example 1, and the difference lies in different mass contents of the electrolyte in the monomer-electrolyte mixture, as shown in Table 1 and Table 2.

Comparative Example 3 and Comparative Example 4 respectively use the method basically the same as that in Example 1, and the difference lies in different concentrations of the lithium salt in the electrolyte in step (1), as shown in Table 1 and Table 2.

Comparative Example 5 and Comparative Example 6 respectively use the method basically the same as that in Example 1, and the difference lies in different coating thicknesses, as shown in Table 1 and Table 2.

Comparative Example 7 uses the method basically the same as that in Example 1, and the difference lies in different structures of the monomer compound II (not substituted by fluorine in the side chain), as shown in Table 1 and Table 2.

In Comparative Example 8, a polymer solution with a molecular weight of 1000 kDa is sprayed onto the surface of a pure lithium plate, and then, the pure lithium plate is dried to obtain a coated polymer layer, as shown in Table 1 and Table 2. The polymer solution is prepared by dissolving 18 g of a polymer in 50 mL of a solvent, wherein the polymer is a PVdF HFP (polyvinylidene fluoride-hexafluoropropylene) copolymer, the weight average molecular weight is 500 kDa, and the solvent is tetrahydrofuran (THF).

In Comparative Example 9, a pure lithium plate is used as a negative electrode plate, that is, there is no polymer layer.

**Table 1.**

| No. | Structural formula of fluoromonomer (monomer compound II) | Fluorine substitution rate in Rf in monomer % | Lithium salt in electrolyte in step (1) | Electrolyte solvent in step (1) | Concentration of lithium salt in electrolyte in step (1) (mol/L) | Mass content of electrolyte in monomer-electrolyte mixture (%) |
|---|---|---|---|---|---|---|
| Example 1 | 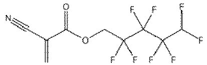 | 72.7 | Lithium bis(fluorosu lfonyl)imide (LiFSI) | Dimethoxye thane (DME) | 0.74 | 36.7 |
| Example 2 | 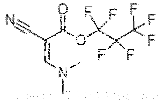 | 100.0 | Lithium difluoro(oxa lato)borate (LiDFOB) | Dimethoxye thane (DME) | 0.74 | 36.7 |
| Example 3 | 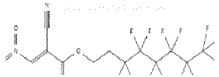 Molecular formula: O₂N-CH=C(-CN)-C(=O)-O-(CH₂)₂(CF₂)₅CF₃ | 76.5 | Lithium difluoro(oxa lato)borate (LiDFOB):li thium tetrafluorob orate (LiBF₄)=1:1 | Fluoroethyl ene carbonate (FEC):dieth yl carbonate (DEC)=3:4 | 0.74 | 36.7 |
| Example 4 | 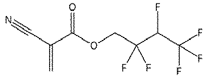 | 66.7 | Lithium tetrafluorob orate (LiBF₄) | Dimethoxye thane (DME) | 0.74 | 36.7 |
| Example 5 | 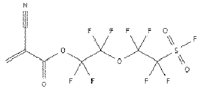 | 100.0 | Lithium bis(trifluoro methanesulf onyl)imide (LiTFSI) | Dimethoxye thane (DME) | 0.74 | 36.7 |
| Example 6 | 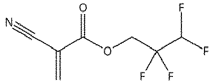 | 57.1 | Lithium hexafluorop hosphate (LiPF₆) | Ethylene carbonate (EC):diethyl carbonate (DEC):fluor oethylene carbonate (FEC)=1:1: 1 | 0.74 | 36.7 |
| Example 7 | 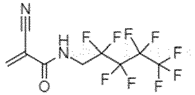 | 84.6 | Lithium bis(fluorosu lfonyl)imide (LiFSI) | Dimethoxye thane (DME) | 0.74 | 36.7 |
| Example 8 | 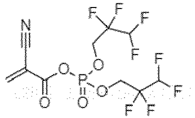 | 57.1 | Lithium hexafluorop hosphate (LiPF₆) | Ethylene carbonate (EC):diethyl carbonate (DEC):fluor oethylene carbonate (FEC)=1:1: 1 | 0.74 | 36.7 |
| Example 9 | 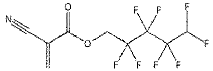 | 72.7 | Lithium bis(fluorosu lfonyl)imide (LiFSI) | Dimethoxye thane (DME) | 0.74 | 0.5 |
| Example 10 | 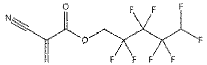 | 72.7 | Lithium bis(fluorosu lfonyl)imide (LiFSI) | Dimethoxye thane (DME) | 0.74 | 500 |
| Example 11 | 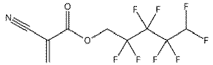 | 72.7 | Lithium bis(fluorosu lfonyl)imide (LiFSI) | Dimethoxye thane (DME) | 0.5 | 36.7 |
| Example 12 | 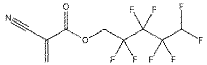 | 72.7 | Lithium bis(fluorosu lfonyl)imide (LiFSI) | Dimethoxye thane (DME) | 10 | 36.7 |
| Example 13 | 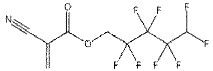 | 72.7 | Lithium bis(fluorosu lfonyl)imide (LiFSI) | Dimethoxye thane (DME) | 0.74 | 36.7 |
| Example 14 | 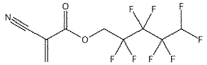 | 72.7 | Lithium bis(fluorosu lfonyl)imide (LiFSI) | Dimethoxye thane (DME) | 0.74 | 36.7 |
| Comparative Example 1 | 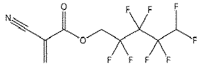 | 72.7 | Lithium bis(fluorosu lfonyl)imide (LiFSI) | Dimethoxye thane (DME) | 0.74 | 0.2 |
| Comparative Example 2 | 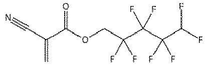 | 72.7 | Lithium bis(fluorosu lfonyl)imide (LiFSI) | Dimethoxye thane (DME) | 0.74 | 75.0 |
| Comparative Example 3 | 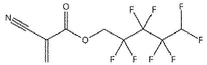 | 72.7 | Lithium bis(fluorosu lfonyl)imide (LiFSI) | Dimethoxye thane (DME) | 0.2 | 36.7 |
| Comparative Example 4 | 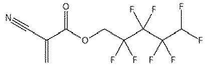 | 72.7 | Lithium bis(fluorosu lfonyl)imide (LiFSI) | Dimethoxye thane (DME) | 11 | 36.7 |
| Comparative Example 5 | 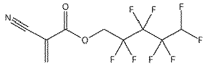 | 72.7 | Lithium bis(fluorosu lfonyl)imide (LiFSI) | Dimethoxye thane (DME) | 0.74 | 36.7 |
| Comparative Example 6 | 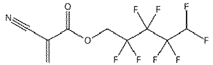 | 72.7 | Lithium bis(fluorosu lfonyl)imide (LiFSI) | Dimethoxye thane (DME) | 0.74 | 36.7 |
| Comparative Example 7 | 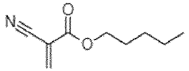 | 0.0 | Lithium bis(fluorosu lfonyl)imide (LiFSI) | Dimethoxye thane (DME) | 0.74 | 36.7 |
| Comparative Example 8 | Physically coated polymer layer | / | / | / | / | / |

**Table 2.**

| No. | Coating thickness (µm) | In-situ polymerization reaction temperature (°C) | In-situ polymer ization reaction time (h) | Number average molecular weight of polymer (kDa) | Averag e degree of polymer ization | Polyme r PDI | Mass proportio n of fluorine element in polymer | Thickness of polymer layer (µm) |
|---|---|---|---|---|---|---|---|---|
| Example 1 | 0.1 | 30 | 2 | 60 | about 193 | 1.4 | 48.9% | 0.1 |
| Example 2 | 0.1 | 65 | 5 | 100 | about 325 | 1.5 | 43.2% | 0.1 |
| Example 3 | 0.1 | 25 | 2 | 20 | about 41 | 1.2 | 50.6% | 0.1 |
| Example 4 | 0.1 | 45 | 4 | 70 | about 268 | 1.3 | 43.7% | 0.1 |
| Example 5 | 0.1 | 60 | 5 | 30 | about 76 | 1.2 | 43.3% | 0.1 |
| Example 6 | 0.1 | 30 | 2 | 150 | about 711 | 1.7 | 36.0% | 0.1 |
| Example 7 | 0.1 | 50 | 5 | 50 | about 152 | 1.5 | 52.1% | 0.1 |
| Example 8 | 0.1 | 85 | 6 | 70 | about 173 | 1.4 | 37.5% | 0.1 |
| Example 9 | 0.1 | 30 | 2 | 60 | about 173 | 1.4 | 48.9% | 0.1 |
| Example 10 | 0.1 | 30 | 2 | 60 | about 173 | 1.4 | 48.9% | 0.1 |
| Example 11 | 0.1 | 30 | 2 | 60 | about 173 | 1.4 | 48.9% | 0.1 |
| Example 12 | 0.1 | 30 | 2 | 60 | about 173 | 1.4 | 48.9% | 0.1 |
| Example 13 | 0.05 | 30 | 2 | 60 | about 173 | 1.4 | 48.9% | 0.05 |
| Example 14 | 5 | 30 | 2 | 60 | about 173 | 1.4 | 48.9% | 5 |
| Comparative Example 1 | 0.1 | 30 | 2 | 60 | about 173 | 1.4 | 48.9% | 0.1 |
| Comparative Example 2 | 0.1 | 30 | 2 | 60 | about 173 | 1.4 | 48.9% | 0.1 |
| Comparative Example 3 | 0.1 | 30 | 2 | 60 | about 173 | 1.4 | 48.9% | 0.1 |
| Comparative Example 4 | 0.1 | 30 | 2 | 60 | about 173 | 1.4 | 48.9% | 0.1 |
| Comparative Example 5 | 0.02 | 30 | 2 | 60 | about 173 | 1.4 | 48.9% | 0.02 |
| Comparative Example 6 | 8 | 30 | 2 | 60 | about 173 | 1.4 | 48.9% | 8 |
| Comparative Example 7 | 0.1 | 30 | 2 | 150 | about 899 | 1.7 | 0 | 0.1 |
| Comparative Example 8 | 10 | / | / | 1000 | | | / | 10 |
| Comparative Example 9 | 0 | / | / | None | | / | / | 0 |

| | | | | | | | | |
|---|---|---|---|---|---|---|---|---|
| Note 1: The "about" in the average degree of aggregation represents ±2; and the average degree of polymerization corresponds to an average value of n values of the polymer Poly shown in Formula I in the polymer layer. | | | | | | | | |

### Preparation of test sample

### 1. Preparation of polymer layer film

(1) At 25°C, 30 g of 2,2,3,3,4,4,5,5-octafluoropentane-2- cyanoacrylate, 2.4 g of lithium bis(fluorosulfonyl)imide (LiFSI) and 15 g of dimethoxyethane (DME) were stirred evenly at a room temperature to obtain an even solution.
(2) 0.48 g of lithium powder was added to the even solution obtained in step (1), and the solution was quickly stirred evenly and then coated on a glass plate for standing and reacting for 2 h at 30°C to obtain a transparent polymer layer film with a film thickness of 15 µm.

### Structure and performance test

### 1. Polymer composition representation in polymer layer (lithium metal protective layer)

A lithium plate containing a polymer layer was soaked in isopropanol, the lithium plate was corroded and consumed, generated lithium isopropoxide can be dissolved in isopropanol, the polymer cannot be dissolved in isopropanol and precipitates, and then, the product was centrifugally dried to obtain a solid sample of the polymer.

1.1. Fourier transform infrared spectroscopy (FT-IR) test: An ATR mode was used, the resolution was 4cm⁻¹, the scanning frequency was 32, and the wave number scope was 4000 cm⁻¹ to 400 cm⁻¹.

1.2. ¹H NMR nuclear magnetic test: The ¹H resonance frequency was 400 MHz, the solvent was deuterated dimethyl sulfoxide (DMSO-d₆), and tetramethylsilane (TMS) was an internal standard.

1.3. Molecular weight test: The polymer sample was dissolved in NMP, and the molecular weight was measured by gel permeation chromatography (GPC) to obtain the weight average molecular weight, the number average molecular weight, and the molecular weight polydispersity index (PDI).

1.4. Test of thickness of polymer layer: A laser thickness gauge was used for measuring the thickness of a polymer coating.

1.5. Viscosity test: A viscometer was used for testing the viscosity of the polymer solution. The polymer solution was prepared by dissolving 5 g of a polymer in 30 mL of NMP. The test temperature was 25°C.

### 2. Content of fluorine element

The content of the fluorine element in the polymer layer may be detected by X-ray photoelectron spectroscopy (XPS).

### 3. Swelling parameter

The swelling parameter of the polymer layer was tested by the following method:

The test temperature was 25°C. A lithium metal plate containing a polymer layer was cut into square samples of 30 mm×30 mm, each group includes three parallel samples, and the mass of each sample was weighed. Then, the sample was soaked in 1 mol/L DME electrolyte of LiFSI for 2 hours for swelling. The residual electrolyte on the surface of the swollen sample was gently wiped with filter paper, and then, the mass of the swollen sample was weighed. The swelling rate of the polymer layer was the percentage of the mass increment of the swollen sample to the original sample mass.

### 4. Ion conductivity

The test temperature was 25°C. The polymer layer film was punched into a circular plate with a diameter of Φ 16 mm; the circular plate of the polymer layer film was soaked in the electrolyte for 1 h and then taken out, and the electrolyte on the surface of the film was wiped with filter paper; the ion conductivity of the polymer layer film after swelling of the electrolyte was computed by Formula σ=d/RA, wherein d represents the thickness of the film, measured with a micrometer, A represents the area of the film, and R represents the impedance of the film; the impedance of symmetrical batteries was tested by an electrochemical workstation, the test frequency was 10⁻⁶ to 10⁻¹Hz, and the voltage amplitude was 5 mV; and an intersection point between a graph and a horizontal axis was determined as the impedance R of the polymer film.

### 5. Elastic modulus and elastic deformation

Elastic modulus: The test temperature was 25°C. The polymer layer film was cut into a strip with a length L₀ of 150 mm and a width of 20 mm, the elastic modulus of the polymer film was measured by a universal test machine, the stretching distance was 100 mm, the stretching velocity was 50 mm/min, and the maximum tensile force of the polymer layer film was determined as the elastic modulus.

Elastic deformation: The test temperature was 25°C. The polymer film was stretched, the length at the time of film breakage was denoted as L, and then, the elastic deformation of the film can be calculated as (L-L₀)/L₀×100%.

### 6. Binding performance test of polymer layer (degree of peeling)

By controlling the reaction time, the thickness of the polymer layer on the surface of the lithium metal was controlled at about 5 µm, and a scope of 50×100 mm was taken as a peeling test sample. A sharp blade (with a sharp angle of 15° to 30°) was used for scratching 10× 10 small grids with a size of 1 mm×1 mm on the surface of a protective layer sample, and each scratching line should be as deep as the bottom layer of the protective layer; a brush was used for cleaning the debris in a test area; an adhesive tape (3M 600 tape or equivalent) with an adhesion force of 350 g/cm² to 400g/cm² was used to firmly adhere to the tested small grid, and the adhesive tape was wiped by force with an eraser to increase the contact area and strength between the adhesive tape and the tested area; one end of the adhesive tape was grasped by hand, the tape was quickly torn off in a vertical direction (90°), and two same tests were conducted at the same position; and finally, a magnifying glass was used for observing the condition of the grid area. If there was no falling-off or falling-off occurs within a protective layer interval, it was qualified, but falling-off and peeling occur between the metal and the protective layer; if the area was greater than 65%, it was classified as level 0B; if the area was 35% to 65%, it was classified as level 1B; if the area was 15% to 35%, it was classified as level 2B; if the area was 5% to 15%, it was classified as level 3B; if the area was less than or equal to 5%, it was classified as level 4B; and if the edge of the notch was completely smooth and there is no peeling at the edge of the grid, it was classified as level 5B.

### 7. Electrode plate performance test

Volume expansion rate of electrode plate: The test temperature was 25°C. The thickness of a fresh lithium plate was d1. When cycling to the fully discharged state after 50 cycles, the battery was disassembled, and an optical microscope was used for measuring to determine that the thickness of the lithium plate was d2, and the expansion rate of the electrode plate was (d2-d1)/d1×100%.

### 8. Battery performance test

(1) Cyclic performance test: The test temperature was 25°C. The lithium metal battery was first charged with a constant current to 4.25 V, and then discharged to 3.0 V to obtain the specific discharge capacity (Cd1) after the first cycle. The charging and discharging processes were repeated for 50 cycles. The specific discharge capacity of the lithium metal battery after n cycles was recorded as Cdn. Capacity retention rate=specific discharge capacity after n cycles (Cdn)/specific discharge capacity after first cycle (Cd1)×100%.

(2) Surface observation of lithium negative electrode: When cycling to the fully discharged state after 50 cycles, the battery was disassembled, and the uniformity of lithium deposition/dissolution and the surface flatness of the lithium negative electrode were observed under the optical microscope;

### Test results

The test results of the molecular weight of the polymer in the polymer layer, the mass proportion of the fluorine element in the polymer and the thickness of the polymer layer can be seen in Table 2. The test results of the swelling rate, ion conductivity, elastic modulus and elastic deformation of the polymer layer, and the capacity retention rate, lithium dendrites, volume expansion rate of the electrode plate and degree of peeling of the lithium ion battery prepared by using the negative electrode plate containing the polymer layer of the present application after 50 cycles can be seen in Table 3.

### Example 1:

FTIR: 2853-2962 cm⁻¹, C-H stretching vibration; 2248 cm⁻¹, -CN stretching vibration; 1743 cm⁻¹, -C=O stretching vibration; 1100-1300 cm⁻¹, -C-F stretching vibration; 400-700 cm⁻¹, -C-F bending vibration.

¹HNMR: δ 1.3 ppm, -CH₂-; δ 4.3 ppm, -CHF₂; δ 2.6-3.0 ppm, main chain -CH₂.

GPC: 60 kDa; PDI:1.4.

Viscosity (25°C): 3652 cp.

### Example 2:

FTIR: 2890-2962 cm⁻¹, C-H stretching vibration; 2245 cm⁻¹, -CN stretching vibration; 1747 cm⁻¹, -C=O stretching vibration; 1190 cm⁻¹, C-N stretching vibration; 1100-1300 cm⁻¹, -C-F stretching vibration; 400-700 cm⁻¹, -C-F bending vibration.

¹HNMR: δ 1.3 ppm, -CH₂-; δ 4.3 ppm, -CHF₂; δ 2.6-3.0 ppm, main chain -CH₂.

GPC: 100 kDa; PDI:1.5.

### Example 3:

FTIR: 2856-2960 cm⁻¹, C-H stretching vibration; 2243 cm⁻¹, -CN stretching vibration; 1749 cm⁻¹, -C=O stretching vibration; 1100-1300 cm⁻¹, -C-F stretching vibration; 400-700 cm⁻¹, -C-F bending vibration.

¹HNMR: δ 1.3 ppm, -CH₂-; δ 4.3 ppm, -CHF₂; δ 2.6-3.0 ppm, main chain -CH₂.

GPC: 20 kDa; PDI:1.2.

### Example 4:

FTIR: 2853-2962 cm⁻¹, C-H stretching vibration; 2247 cm⁻¹, -CN stretching vibration; 1745 cm⁻¹, -C=O stretching vibration; 1100-1300 cm⁻¹, -C-F stretching vibration; 400-700 cm⁻¹, -C-F bending vibration.

¹HNMR: δ 1.3 ppm, -CH₂-; δ 4.3 ppm, -CHF₂; δ 2.6-3.0 ppm, main chain -CH₂.

GPC: 70 kDa; PDI:1.3.

### Example 5:

FTIR: 2853-2962 cm⁻¹, C-H stretching vibration; 2248 cm⁻¹, -CN stretching vibration; 1748 cm⁻¹, -C=O stretching vibration; 1100-1300 cm⁻¹, -C-F stretching vibration; 400-700 cm⁻¹, -C-F bending vibration.

¹HNMR: δ 1.3 ppm, -CH₂-; δ 4.3 ppm, -CHF₂; δ 2.6-3.0 ppm, main chain -CH₂.

GPC: 30 kDa; PDI:1.2.

### Example 6:

FTIR: 2853-2962 cm⁻¹, C-H stretching vibration; 2239 cm⁻¹, -CN stretching vibration; 1746 cm⁻¹, -C=O stretching vibration; 1100-1300 cm⁻¹, -C-F stretching vibration; 400-700 cm⁻¹, -C-F bending vibration.

¹HNMR: δ 1.3 ppm, -CH₂-; δ 4.3 ppm, -CHF₂; δ 2.6-3.0 ppm, main chain -CH₂.

GPC: 150 kDa; PDI:1.7.

### Example 7:

FTIR: 3220-3410 cm⁻¹, N-H stretching vibration; 2853-2962 cm⁻¹ C-H stretching vibration; 2231 cm⁻¹, -CN stretching vibration; 1673 cm⁻¹, -C=O stretching vibration; 1100-1300 cm⁻¹, -C-F stretching vibration; 400-700 cm⁻¹, -C-F bending vibration. ¹HNMR: δ 1.3 ppm, -CH₂-; δ 4.3 ppm, -CHF₂; δ 2.6-3.0 ppm, main chain -CH₂.

GPC: 50 kDa; PDI:1.5.

### Example 8:

FTIR: 2853-2962 cm⁻¹ C-H stretching vibration; 2231 cm⁻¹, -CN stretching vibration; 1735 cm⁻¹, -C=O stretching vibration; 1100-1300 cm⁻¹, -C-F stretching vibration; 400-700 cm⁻¹, -C-F stretching vibration; 1396 cm⁻¹, -P=O stretching vibration; 741 cm⁻¹, -P-O bending vibration.

¹HNMR: δ 1.3 ppm, -CH₂-; δ 4.3 ppm, -CHF₂; δ 2.6-3.0 ppm, main chain -CH₂.

GPC: 70 kDa; PDI:1.4.

Compared with Comparative Example 8 and Comparative Example 9, if the polymer layer of the present application is contained (Examples 1 to 14, Comparative Examples 3 to 6), after multiple cycles of a lithium metal battery, the volume expansion of the lithium negative electrode is significantly inhibited, which is beneficial for maintaining a good capacity retention rate of the battery.

Different fluorine element substitution rates and fluorine contents may be achieved by regulating the monomer structure in the polymer layer. Compared with Comparative Example 7, the introduction of the fluorine element in Examples 1 to 14 is beneficial for enhancing the regulatory effect of a protective film on lithium ion deposition, improving the dendrite morphology, and reducing the volume expansion.

By comparing Example 7 with Comparative Example 8, it can be seen that when fluorine-substituted aliphatic groups are connected to a polymer main chain through amide groups (Z in Example 7 is NH), the polymer protective layer may improve the ion conductivity of the polymer layer, improve the battery charging current density, capacity retention rate after 50 cycles and volume expansion performance of the secondary battery, and significantly inhibit lithium dendrites.

By comparing Example 8 with Comparative Example 8, it can be seen that when fluorine-substituted aliphatic groups are connected to a polymer main chain through phosphate ester groups (Z in Example 8 is 0, and the side of Rf close to Z is 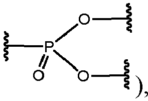 the polymer protective layer may improve the ion conductivity of the polymer layer, improve the battery charging current density, capacity retention rate after 50 cycles and volume expansion performance of the secondary battery, and significantly inhibit lithium dendrites.

By comparing Examples 9 to 10 with Comparative Examples 1 to 2, it can be seen that the swelling rate and mechanical properties of the polymer layer may be regulated by controlling the content of the electrolyte in the polymer layer. In Comparative Example 1, although a high electrolyte content is beneficial for increasing the ion conductivity, the rigidity of the film is lower, which is not conducive to charging and discharging of a high current higher than 3 mA/cm², dendrites are severe, the volume expansion is larger, and the capacity decay is rapid. In Comparative Example 2, the ion conductivity is reduced, which is not conducive to charging and discharging of a high current higher than 3 mA/cm², dendrites are severe, the volume expansion is larger, and the capacity decay is rapid.

By comparing Examples 11 to 12 with Comparative Examples 3 to 4, it can be seen that by regulating the concentration of the lithium salt in the polymer layer, the polymer layer may exhibit different deposition morphologies and expansion rates. If the concentration of the lithium salt is lower, the ion conductivity of the polymer protective layer is low, and the elastic modulus is low, which is not conducive to inhibition of the volume expansion of dendrites and the negative electrode side. If the concentration of the lithium salt is higher, the mechanical strength of the material may be affected.

By comparing Examples 13 to 14 with Comparative Examples 5 to 7, it can be seen that the thickness of the polymer layer needs to be controlled within a certain scope. If the polymer layer is too thick, the polarization of the battery cell is large, the ion conductivity is low, and the cyclic decay is rapid. If the polymer layer is too thin, the mechanical strength is poor, which is not conducive to inhibition of the uneven deposition of dendrites and lithium.

In summary, by adjusting the fluorine content, lithium salt concentration, electrolyte content, thickness and the like of the protective layer film, the film may obtain higher conductivity and mechanical strength, which is conducive to the application of the protective layer in a lithium metal battery with high current density for charging and discharging cycles.

**Table 3.**

| No. | Swelling rate (%) | Ion conductivity (S/cm) | Elastic modulus of polymer layer (MPa) | Elastic deformation of polymer layer (%) | Charging current density of battery (mA/cm² ) | Capacity retention rate after 50 cycles (%) | Lithium dendrite | Volume expansion rate of plate (%) | Degree of peeling |
|---|---|---|---|---|---|---|---|---|---|
| Example 1 | 34.2 | 1.8×10⁻³ | 32 | 180 | 3 | 95 | None | 9 | 5B level |
| Example 2 | 29.3 | 1.2×10⁻³ | 41 | 172 | 3 | 94 | None | 11 | 5B level |
| Example 3 | 31 | 1.5×10⁻³ | 29 | 167 | 3 | 93 | None | 8 | 5B level |
| Example 4 | 35.6 | 2.3×10⁻³ | 34 | 177 | 3 | 97 | None | 7 | 5B level |
| Example 5 | 32.2 | 2.1×10⁻³ | 26 | 153 | 3 | 96 | None | 7 | 5B level |
| Example 6 | 26.1 | 1.1×10⁻³ | 46 | 103 | 2.5 | 91 | A small amount | 53 | 5B level |
| Example 7 | 28.3 | 1.2×10⁻³ | 23 | 92 | 2.1 | 89 | A small amount | 65 | 5B level |
| Example 8 | 37.2 | 1.6×10⁻³ | 29 | 183 | 3 | 93 | None | 10 | 5B level |
| Example 9 | 44.6 | 2.9×10⁻³ | 18 | 64 | 1 | 86 | A small amount | 89 | 5B level |
| Example 10 | 20 | 8.7×10⁴ | 46 | 127 | 1 | 84 | A small amount | 96 | 5B level |
| Example 11 | 33.1 | 1.0×10⁻³ | 36 | 174 | 3 | 94 | None | 12 | 5B level |
| Example 12 | 36.3 | 2.2×10⁻³ | 29 | 146 | 3 | 97 | None | 7 | 5B level |
| Example 13 | 37.8 | 2.5×10⁻³ | 31 | 194 | 3 | 96 | None | 12 | 5B level |
| Example 14 | 21.3 | 9.2×10⁴ | 32 | 173 | 1 | 87 | A small amount | 86 | 5B level |
| Comparative Example 1 | 51.3 | 3.1×10⁻³ | 11 | 43 | 0.5 | 75 | Serious | 112 | 5B level |
| Comparative Example 2 | 10.7 | 6.7×10⁻⁵ | 50 | 69 | 0.2 | 65 | Serious | 129 | 5B level |
| Comparative Example 3 | 32.8 | 8.9×10⁻⁴ | 27 | 193 | 1.2 | 78 | Serious | 109 | 5B level |
| Comparative Example 4 | 41.2 | 2.6×10⁻³ | 22 | 112 | 1 | 69 | Serious | 123 | 5B level |
| Comparative Example 5 | 45.6 | 3.0×10⁻³ | 30 | 218 | 3 | 97 | None | 7 | 5B level |
| Comparative Example 6 | 13.9 | 9.7×10⁻⁵ | 33 | 156 | 3 | 95 | None | 19 | 5B level |
| Comparative Example 7 | 32.2 | 1.6×10⁻³ | 36 | 162 | 3 | 74 | Serious | 123 | 5B level |
| Comparative Example 8 | 21.4 | 4.9×10⁻⁵ | 32 | 27 | 0.5 | 61 | Serious | 138 | 2B level |
| Comparative Example 9 | / | / | / | / | 0.3 | 50 | Serious | 145 | / |

The technical features of the above examples may be combined arbitrarily. In order to make the description concise, not all possible combinations of the technical features in the above examples are described. However, all the combinations of the technical features should be considered as falling within the scope described in this specification provided that they do not conflict with each other.

It should be noted that the present application is not limited to the above embodiments. The above embodiments are merely illustrative, and embodiments having substantively the same composition as the technical idea and exerting the same effects within the scope of the technical solution of the present application are all included in the technical scope of the present application. The above examples only describe several embodiments of the present application, and the description thereof is specific and detailed, but cannot therefore be understood as a limitation on the patent scope of the present application. In addition, without departing from the scope of the subject matter of the present application, various modifications applied to the embodiments that can be conceived by those skilled in the art, and other modes constructed by combining some of the constituent elements of the embodiments are also included in the scope of the present application. It should be noted that those of ordinary skill in the art may further make several variations and improvements without departing from the concept of the present application, all of which fall within the protection scope of the present application. Therefore, the protection scope of the present application should be subject to the appended claims, and the specification and accompanying drawings can be used to explain the content of the claims.

## Claims

1. A lithium coating composition, comprising a lithium-containing metal and a polymer Poly chemically connected to a lithium surface in the lithium-containing metal, the polymer Poly having a structure shown in Formula I: 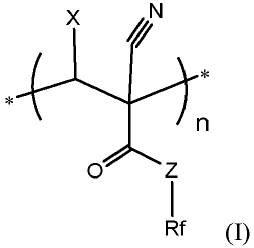 wherein,
each occurrence of Rf is independently a fluorine-substituted aliphatic group;
each occurrence of X is independently H or an electron-withdrawing group;
each occurrence of Z is independently O, S or NR¹¹, wherein R¹¹ is H or C₁₋₃ alkyl;
* indicates a site connecting a terminal group;
n is an integer ≥10; and
at least one cyano group in the polymer Poly forms a chemical connection with lithium in the lithium-containing metal.

2. The lithium coating composition according to claim 1, wherein each time Rf appears, the fluorine substitution rate in Rf independently satisfies >50%;
further preferably, the fluorine substitution rate in Rf independently satisfies ≥55%;
further preferably, the fluorine substitution rate in Rf independently satisfies ≥65%;
further preferably, the fluorine substitution rate in Rf independently satisfies ≥70%;
further preferably, the fluorine substitution rate in Rf independently satisfies ≥80%;
further preferably, at least 50% of the Rf in the polymer Poly satisfies a fluorine substitution rate ≥80%, or ≥90%;
further preferably, at least 60% of the Rf in the polymer Poly satisfies a fluorine substitution rate ≥70%, >_80%, or ≥90%;
further preferably, at least 70% of the Rf in the polymer Poly satisfies a fluorine substitution rate ≥60%, >_70%, >_80%, or ≥90%; and
further preferably, at least 80% of the Rf in the polymer Poly satisfies a fluorine substitution rate ≥50%, >_60%, >_70%, >_80%, or ≥90%.

3. The lithium coating composition according to any one of claims 1 to 2, wherein each time Rf appears, the number of fluorine atoms in Rf is independently an integer ≥4;
preferably, the number of fluorine atoms in Rf is independently an integer selected from 4 to 20;
further preferably, the number of fluorine atoms in Rf is independently an integer selected from 4 to 16;
further preferably, the number of fluorine atoms in Rf is independently an integer selected from 4 to 15;
further preferably, the number of fluorine atoms in Rf is independently an integer selected from 4 to 13;
further preferably, the number of fluorine atoms in Rf is independently an integer selected from 4 to 10; and
further preferably, the number of fluorine atoms in Rf is 4, 5, 6, 7, 8, 9, 10, 11, 12 or 13 independently.

4. The lithium coating composition according to any one of claims 1 to 3, wherein the mass proportion of fluorine element in the polymer Poly is selected from 30% to 55%;
preferably, the mass proportion of fluorine element in the polymer Poly is selected from 35% to 55%; and
further preferably, the mass proportion of fluorine element in the polymer Poly is selected from 30% to 50%.

5. The lithium coating composition according to any one of claims 1 to 4, wherein each time Rf appears, Rf contains 2 to 10 main chain carbon atoms;
preferably, Rf contains 3 to 10 main chain carbon atoms;
further preferably, Rf contains 3 to 8 main chain carbon atoms; and
further preferably, Rf contains 3, 4, 5, 6, 7 or 8 main chain carbon atoms.

6. The lithium coating composition according to claim 5, wherein each time Rf appears, the number of carbon atoms in Rf is an integer selected from 2 to 10;
preferably, the number of carbon atoms in Rf is an integer selected from 3 to 10;
further preferably, the number of carbon atoms in Rf is an integer selected from 3 to 8; and
further preferably, the number of carbon atoms in Rf is 3, 4, 5, 6, 7 or 8.

7. The lithium coating composition according to any one of claims 1 to 6, wherein each time Rf appears, Rf further contains one or more heteroatoms selected from the group consisting of iodine, nitrogen, oxygen, sulfur, silicon, boron and phosphorus.

8. The lithium coating composition according to claim 7, wherein each time Rf appears, the number of any one of the heteroatoms in Rf is 1 or more;
preferably, the number of any one of the heteroatoms in Rf is selected from 1 to 5; and
further preferably, the number of any one of the heteroatoms in Rf is selected from 1, 2, 3 or 4.

9. The lithium coating composition according to claim 7 or 8, wherein each time Rf appears, the number of the heteroatoms in Rf satisfies one or more of the following:
the number of oxygen atoms in Rf is 1, 2, 3, 4 or 5;
the number of nitrogen atoms in Rf is 1, 2 or 3;
the number of sulfur atoms in Rf is 1, 2 or 3;
the number of phosphorus atoms in Rf is 1 or 2;
the number of iodine atoms in Rf is 1, 2, 3, 4, 5 or 6;
the number of silicon atoms in Rf is 1 or 2; and
the number of boron atoms in Rf is 1 or 2.

10. The lithium coating composition according to any one of claims 1 to 8, wherein each time Rf appears, Rf contains one or more atoms or atomic groups selected from the group consisting of iodine groups, -NR¹²-, -O-, -S-, -S(O)₂-, >Si<, >B- and >P(=O)-, wherein R¹² is H or C₁₋₃ alkyl;
preferably, R¹² is H or methyl; and
further preferably, R¹² is H.

11. The lithium coating composition according to claim 10, wherein each time Rf appears, Rf contains one or more atoms or atomic groups selected from the group consisting of -O-, - S(O)₂- and -(O=)P(O-)₂;
preferably, Rf contains one or more -O-;
further preferably, Rf contains -S(O)₂F; and
further preferably, Rf contains -(O=)P(O-)₂.

12. The lithium coating composition according to any one of claims 1 to 11, wherein each occurrence of the fluorine-substituted aliphatic group is independently a straight chain structure or a branched chain structure.

13. The lithium coating composition according to any one of claims 1 to 6, wherein each time Rf appears, the structure of Rf is independently shown in Formula III-1, Formula III-2 or Formula III-3: 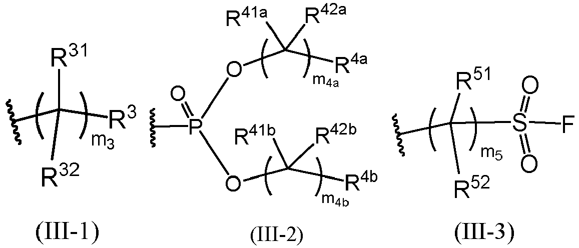
wherein each occurrence of R³¹, R³² and R³ is independently H or F; each occurrence of m₃ is independently an integer selected from 2 to 10; Formula III-1 contains at least 4 F atoms;
preferably, m₃ is an integer selected from 3 to 10;
further preferably, m₃ is an integer selected from 3 to 8;
further preferably, m₃ is 3, 4, 5, 6, 7 or 8;
each occurrence of R^{41a}, R^{42a}, R^{4a}, R^{41b}, R^{42b} and R^{4b} is independently H or F; each occurrence of m₄ₐ and m4_{4b} is independently an integer selected from 1 to 9; Formula III-2 contains at least 4 F atoms;
preferably, m₄ₐ and m4_{4b} are each independently an integer selected from 2 to 9;
further preferably, m₄ₐ and m4_{4b} are each independently an integer selected from 2 to 8;
further preferably, m₄ₐ and m4_{4b} are each independently an integer selected from 3 to 8;
further preferably, m₄ₐ and m4_{4b} are each independently an integer selected from 3 to 6;
each occurrence of R⁵¹ and R⁵² is independently H or F; each occurrence of m₅ is independently an integer selected from 2 to 10; Formula III-3 contains at least 4 F atoms;
preferably, m₅ is an integer selected from 3 to 10;
further preferably, m₅ is an integer selected from 3 to 8; and
further preferably, m₅ is 3, 4, 5, 6, 7 or 8.

14. The lithium coating composition according to claim 13, wherein each time Rf appears, the structure of Rf is shown in Formula III-1;
or, each time Rf appears, the structure of Rf is shown in Formula III-2;
or, each time Rf appears, the structure of Rf is shown in Formula III-3.

15. The lithium coating composition according to claim 13 or 14, wherein each time Formula III-1 appears, the number of H atoms therein is 0, 1, 2, 3 or 4; each time Formula III-2 appears, the number of H atoms therein is 0, 1, 2, 3, 4, 5 or 6; and each time Formula III-3 appears, the number of H atoms therein is 0, 1, 2, 3 or 4;
preferably, each time Formula III-1 appears, the number of H atoms therein is 0; each time Formula III-2 appears, the number of H atoms therein is 0; and each time Formula III-3 appears, the number of H atoms therein is 0.

16. The lithium coating composition according to any one of claims 13 to 15, wherein each occurrence of Rf is independently selected from any one of the following structures:

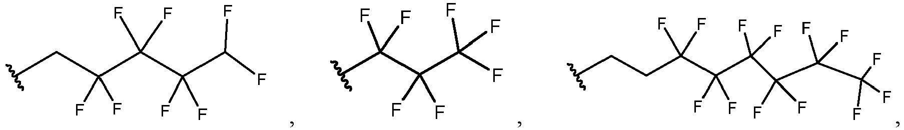

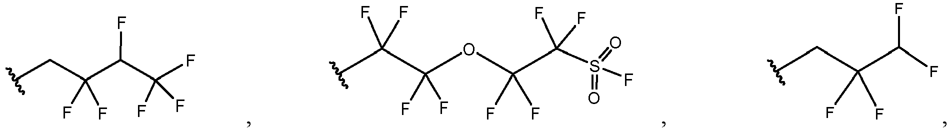

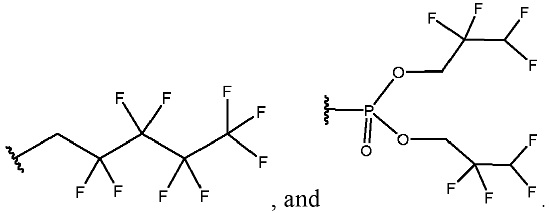

17. The lithium coating composition according to any one of claims 1 to 16, wherein each occurrence of X is independently H or an electron-withdrawing group containing 1 to 6 non-hydrogen atoms.

18. The lithium coating composition according to claim 17, wherein each occurrence of X is independently H or cyano, nitro or -NR²¹R²², wherein R²¹ and R²² are each independently H or C₁₋₃ alkyl;
preferably, R²¹ and R²² are each independently H or methyl; and
further preferably, R²¹ and R²² are both methyl.

19. The lithium coating composition according to any one of claims 1 to 18, wherein each occurrence of Z is independently O, S or NH;
preferably, each occurrence of Z is independently O or NH;
further preferably, each occurrence of Z is O; and
further preferably, each occurrence of Z is NH.

20. The lithium coating composition according to any one of claims 1 to 19, wherein Rf in Formula I is the same;
each occurrence of X in Formula I is the same; and
each occurrence of Z in Formula I is the same.

21. The lithium coating composition according to any one of claims 1 to 20, wherein n is an integer selected from 10 to 1000, further preferably an integer selected from 10 to 950, further preferably an integer selected from 10 to 800, further preferably an integer selected from 15 to 800, further preferably an integer selected from 20 to 800, further preferably an integer selected from 40 to 800, further preferably an integer selected from 50 to 800, further preferably an integer selected from 100 to 800, further preferably an integer selected from 10 to 750, further preferably an integer selected from 15 to 750, further preferably an integer selected from 20 to 750, further preferably an integer selected from 40 to 750, further preferably an integer selected from 50 to 750, further preferably an integer selected from 80 to 750, further preferably an integer selected from 100 to 750, further preferably an integer selected from 10 to 650, further preferably an integer selected from 15 to 650, further preferably an integer selected from 20 to 650, further preferably an integer selected from 40 to 650, further preferably an integer selected from 50 to 650, further preferably an integer selected from 100 to 650, further preferably an integer selected from 150 to 500, and further preferably an integer selected from 200 to 350.

22. The lithium coating composition according to any one of claims 1 to 20, wherein the number average molecular weight of the polymer Poly is selected from 10 kDa to 200 kDa; and
preferably, the number average molecular weight of the polymer Poly is selected from 50 kDa to 100 kDa.

23. The lithium coating composition according to any one of claims 1 to 22, wherein the content of lithium in the lithium-containing metal relative to the polymer Poly is greater than the catalyst dosage, measured in a molar ratio;
preferably, the lithium-containing metal includes a lithium metal or a lithium alloy; and further preferably, the lithium alloy contains lithium, and also contains one or more of silver, magnesium, aluminum, gold, zinc, tin, copper, nickel and titanium.

24. A negative electrode plate, wherein the negative electrode plate comprises a negative electrode plate substrate and a polymer layer which are stacked; and the negative electrode plate substrate comprises a lithium-containing layer in contact with the polymer layer, the lithium-containing layer contains lithium, and the polymer layer is chemically connected to at least a portion of lithium in the lithium-containing layer;
wherein the polymer layer comprises the polymer Poly defined in any one of claims 1 to 22.

25. The negative electrode plate according to claim 24, wherein the content of lithium in the lithium-containing layer relative to the polymer Poly is greater than the catalyst dosage, measured in a molar ratio;
preferably, the lithium-containing layer comprises a lithium metal or a lithium alloy; and
further preferably, the lithium alloy contains lithium, and also contains one or more of silver, magnesium, aluminum, gold, zinc, tin, copper, nickel and titanium.

26. The negative electrode plate according to any one of claims 24 to 25, wherein the polymer layer further contains an electrolyte.

27. The negative electrode plate according to claim 26, wherein the electrolyte contains a lithium salt and an electrolyte solvent.

28. The negative electrode plate according to claim 27, wherein the lithium salt is selected from one or more of lithium hexafluorophosphate, lithium tetrafluoroborate, lithium bis(fluorosulfonyl)imide, lithium bis(trifluoromethanesulfonyl)imide, lithium difluoro(oxalato)borate, lithium perchlorate, and lithium bis(oxalate)borate; and
preferably, the electrolyte solvent is selected from one or more of ethylene carbonate, propylene carbonate, dimethyl carbonate, diethyl carbonate, ethyl methyl carbonate, dipropyl carbonate, diphenyl carbonate, dibutyl carbonate, butene carbonate, dimethoxyethane, tetrahydrofuran, dioxolane, methyl 9-fluoro-n-butyl ether, 1,1,2,2-tetrafluoroethyl-2,2,3,3-tetrafluoropropyl ether, octafluoropentyl-tetrafluoroethyl ether, 1,2-di(cyanoethoxy)ethane, diphenyl ether, and 18-crown ether-6.

29. The negative electrode plate according to any one of claims 27 to 28, wherein the concentration of the lithium salt in the electrolyte is selected from 0.5 mol/L to 10 mol/L;
preferably, the concentration of the lithium salt in the electrolyte is selected from 0.5 mol/L to 8 mol/L;
further preferably, the concentration of the lithium salt in the electrolyte is selected from 0.5 mol/L to 5 mol/L;
further preferably, the concentration of the lithium salt in the electrolyte is selected from 5 mol/L to 10 mol/L;
further preferably, the concentration of the lithium salt in the electrolyte is selected from 0.5 mol/L to 3 mol/L; and
further preferably, the concentration of the lithium salt in the electrolyte is selected from 0.5 mol/L to 2 mol/L.

30. The negative electrode plate according to any one of claims 26 to 29, wherein the mass ratio of the polymer Poly to the electrolyte is selected from 199:1 to 1:1;
preferably, the mass ratio of the polymer Poly to the electrolyte is selected from 19:1 to 1:1;
further preferably, the mass ratio of the polymer Poly to the electrolyte is selected from 9.5:1 to 1:1;
further preferably, the mass ratio of the polymer Poly to the electrolyte is selected from 8:1 to 2:1; and
further preferably, the mass ratio of the polymer Poly to the electrolyte is selected from 6:1 to 1:1.

31. The negative electrode plate according to any one of claims 26 to 30, wherein the mass proportion of the electrolyte in the polymer layer is selected from 0.5% to 50%;
preferably, the mass proportion of the electrolyte in the polymer layer is selected from 1% to 50%;
further preferably, the mass proportion of the electrolyte in the polymer layer is selected from 2% to 50%;
further preferably, the mass proportion of the electrolyte in the polymer layer is selected from 5% to 50%;
further preferably, the mass proportion of the electrolyte in the polymer layer is selected from 8% to 50%;
further preferably, the mass proportion of the electrolyte in the polymer layer is selected from 9% to 50%;
further preferably, the mass proportion of the electrolyte in the polymer layer is selected from 9.5% to 50%;
further preferably, the mass proportion of the electrolyte in the polymer layer is selected from 10% to 50%; and
further preferably, the mass proportion of the electrolyte in the polymer layer is selected from 30% to 50%.

32. The negative electrode plate according to any one of claims 24 to 31, wherein the thickness of the polymer layer is selected from 5 nm to 10 µm;
preferably, the thickness of the polymer layer is selected from 50 nm to 8 µm;
further preferably, the thickness of the polymer layer is selected from 50 nm to 5 µm; and
further preferably, the thickness of the polymer layer is selected from 100 nm to 5 µm.

33. The negative electrode plate according to any one of claims 24 to 32, wherein the polymer layer has an elastic modulus of 0.1 MPa to 80 MPa;
preferably, the polymer layer has an elastic modulus of 0.5 MPa to 50 MPa at 25°C;
further preferably, the polymer layer has an elastic modulus of 1 MPa to 50 MPa at 25°C; and
further preferably, the polymer layer has an elastic modulus of 10 MPa to 50 MPa at 25°C.

34. The negative electrode plate according to any one of claims 24 to 33, wherein the polymer layer has an elastic deformation range of 20% to 500%;
preferably, the polymer layer has an elastic deformation range of 20% to 300% at 25°C;
further preferably, the polymer layer has an elastic deformation range of 20% to 200% at 25°C;
further preferably, the polymer layer has an elastic deformation range of 100% to 300% at 25°C;
further preferably, the polymer layer has an elastic deformation range of 100% to 200% at 25°C; and
further preferably, the polymer layer has an elastic deformation range of 100% to 190% at 25°C.

35. The negative electrode plate according to any one of claims 24 to 34, wherein based on the electrolyte, the swelling rate of the polymer layer is selected from 5% to 50%;
preferably, the swelling rate of the polymer layer at 25°C is selected from 10% to 50%;
further preferably, the swelling rate of the polymer layer at 25°C is selected from 10% to 45%; and
further preferably, the swelling rate of the polymer layer at 25°C is selected from 20% to 45%.

36. The negative electrode plate according to claim 35, wherein based on the electrolyte, the ion conductivity of the swollen polymer layer is selected from 5×10⁻³ S/cm to 1×10⁻⁶ S/cm;
preferably, the ion conductivity of the swollen polymer layer at 25°C is selected from 5×10⁻³ S/cm to 1×10⁻⁵ S/cm;
further preferably, the ion conductivity of the swollen polymer layer at 25°C is selected from 5×10⁻³ S/cm to 1×10⁻⁴ S/cm;
further preferably, the ion conductivity of the swollen polymer layer at 25°C is selected from 3×10⁻³ S/cm to 1×10⁻⁴ S/cm; and
further preferably, the ion conductivity of the swollen polymer layer at 25°C is selected from 3×10⁻³ S/cm to 5×10⁻⁴ S/cm.

37. The negative electrode plate according to any one of claims 24 to 36, wherein the negative electrode plate substrate further comprises a negative electrode current collector; and the negative electrode current collector is located on the side of the lithium-containing layer away from the polymer layer.

38. The negative electrode plate according to claim 37, wherein a second negative electrode active material layer is disposed or not disposed between the negative electrode current collector and the lithium-containing layer, and the components in the second negative electrode active material layer and the lithium-containing layer may be the same or different.

39. An electrode assembly, comprising a positive electrode plate, a separator and the negative electrode plate according to any one of claims 24 to 38, which are stacked, wherein the separator is disposed between the negative electrode plate and the positive electrode plate; and the polymer layer is at least disposed on the surface of the negative electrode plate substrate on the side close to the separator.

40. A secondary battery, including a battery cell electrolyte and the electrode assembly according to claim 39, wherein the battery cell electrolyte is disposed between the polymer layer and the positive electrode plate.

41. The secondary battery according to claim 40, wherein the components of the battery cell electrolyte and the electrolyte in the polymer layer may be the same or different.

42. The secondary battery according to claim 40 or 41, wherein the charging current density of the secondary battery is selected from 0.3 mA/cm² to 12 mA/cm²;
preferably, the charging current density of the secondary battery is selected from 1 mA/cm² to 10 mA/cm²; and
further preferably, the charging current density of the secondary battery is selected from 1 mA/cm² to 6 mA/cm².

43. A battery module, comprising the secondary battery according to any one of claims 40 to 42.

44. A battery pack, comprising the battery module according to claim 43.

45. An electrical apparatus, comprising one or more of the secondary battery according to any one of claims 40 to 42, the battery module according to claim 43 and the battery pack according to claim 44.

46. An application of a monomer compound II in preparation of a negative electrode plate, wherein the structure of the monomer compound II is shown in Formula II: 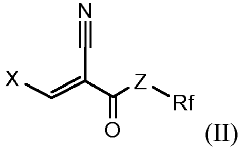 wherein Rf, Z and X are each independently defined in any one of claims 1 to 20.

47. The application according to claim 46, wherein the monomer compound II contacts lithium in the lithium-containing layer of the negative electrode plate substrate so as to form a polymer layer through in-situ polymerization.

48. A preparation method of a negative electrode plate, comprising the following steps:
providing a negative electrode plate substrate, the outermost layer on at least one side of the negative electrode plate substrate being a lithium-containing layer, and the lithium-containing layer comprising a lithium-containing metal; further providing a reaction mixture containing a monomer compound II and an electrolyte; and
coating the reaction mixture on the surface of the lithium-containing layer on at least one side of the negative electrode plate substrate, and polymerizing the monomer compound II in situ to form a polymer layer; 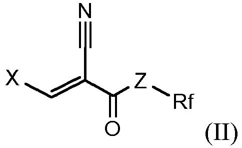
wherein Rf, Z and X are each independently defined in any one of claims 1 to 20, and
the electrolyte is defined in any one of claims 26 to 30.

49. The preparation method according to claim 48, wherein the monomer compound II contacts with at least a catalyst dosage of lithium.

50. The preparation method according to claim 48 or 49, wherein the mass ratio of the monomer compound II to the electrolyte is selected from 199:1 to 1:1;
preferably, the mass ratio of the monomer compound II to the electrolyte is selected from 19:1 to 1:1;
further preferably, the mass ratio of the monomer compound II to the electrolyte is selected from 9.5:1 to 1:1;
further preferably, the mass ratio of the monomer compound II to the electrolyte is selected from 8:1 to 2:1; and
further preferably, the mass ratio of the monomer compound II to the electrolyte is selected from 6:1 to 1:1.

51. The preparation method according to any one of claims 48 to 50, wherein in the step of coating the reaction mixture on the surface of the lithium-containing layer on at least one side of the negative electrode plate substrate, the coating mode is selected from any one of a coating method, a spray coating method, a spin coating method, and a vapor deposition method.

52. The preparation method according to any one of claims 48 to 51, wherein the reaction temperature of the in-situ polymerization is selected from 30°C to 100°C;
preferably, the reaction temperature of the in-situ polymerization is selected from 30°C to 50°C; and
further preferably, the reaction temperature of the in-situ polymerization is selected from 40°C to 60°C.

53. The preparation method according to any one of claims 48 to 52, wherein the reaction time of the in-situ polymerization is selected from 0.1 h to 24 h;
preferably, the reaction time of the in-situ polymerization is selected from 0.1 h to 12 h; and
further preferably, the reaction time of the in-situ polymerization is selected from 0.1 h to 2 h.

54. The preparation method according to any one of claims 48 to 53, wherein in the step of coating the reaction mixture on the surface of the lithium-containing layer on at least one side of the negative electrode plate substrate, the coating thickness of the reaction mixture is selected from 100 nm to 8 µm;
preferably, the coating thickness of the reaction mixture is selected from 50 nm to 5 µm; and
further preferably, the coating thickness of the reaction mixture is selected from 50 nm to 8 µm.

55. The preparation method according to any one of claims 48 to 54, wherein the formed polymer layer is defined in any one of claims 32 to 36.

56. The preparation method according to any one of claims 48 to 55, wherein the negative electrode plate substrate is a pure lithium plate.

57. The preparation method according to any one of claims 48 to 56, wherein the negative electrode plate substrate further comprises a negative electrode current collector; and the negative electrode current collector is located on the side of the lithium-containing layer away from the polymer layer.

58. The preparation method according to claim 57, wherein a second negative electrode active material layer is disposed or not disposed between the negative electrode current collector and the lithium-containing layer, and the components in the second negative electrode active material layer and the lithium-containing layer may be the same or different.
